# EUROPÄISCHE PATENTSCHRIFT

(11) **EP 2 071 327 B1**
(45) Veröffentlichungstag und Bekanntmachung des Hinweises auf die Patenterteilung: **10.02.2016**
(21) Anmeldenummer: 08019968.0
(22) Anmeldetag: 14.11.2008
(51) Int. Cl.: G01N 30/20, G01N 30/22, G01N 35/10

(54) **Probengeber für die Hochleistungsflüssigkeitschromatographie**
Sampler for high performance liquid chromatography
Distributeur d'échantillons pour la chromatographie en phase liquide à haute performance

(30) Priorität: 10.12.2007 DE 102007059651
(43) Veröffentlichungstag der Anmeldung: 17.06.2009
(73) Patentinhaber: Dionex Softron GmbH, 82110 Germering (DE)
(72) Erfinder: Hochgraeber, Hermann, 94560 Offenberg-Neuhausen (DE); Ruegenberg, Gervin, 80689 München (DE)
(74) Vertreter: Eder, Thomas

(56) Entgegenhaltungen:
- EP-A- 0 409 522
- WO-A-2006/021071
- WO-A-2006/083776
- US-A- 4 242 909
- US-A- 5 654 201
- US-A- 6 155 123
- US-B1- 6 382 035
- NAIJUN WU ET AL: "Practical aspects of ultrahigh pressure capillary liquid chromatography", JOURNAL OF CHROMATOGRAPHY A, vol. 911, no. 1, 1 March 2001 (2001-03-01) , pages 1-12, XP055039413, ISSN: 0021-9673, DOI: 10.1016/S0021-9673(00)01188-2

## Beschreibung

Die Erfindung betrifft einen Probengeber für die Hochleistungsflüssigkeitschromatographie (HPLC), insbesondere einen automatischen Probengeber, wie er in der HPLC zur Probeninjektion verwendet wird, mit den Merkmalen des Oberbegriffs des Patentanspruchs 1.

In der HPLC muss eine zu untersuchende Probe in einen Hochdruck-Flüssigkeitsstrom eingespeist werden, wobei dieser nur so kurz wie möglich unterbrochen werden darf. Für diesen Zweck werden Hochdruck-Injektionsventile verwendet, die eine nahezu unterbrechungsfreie Umschaltung des Flüssigkeitsstroms ermöglichen. Ein solcher Aufbau ist beispielsweise in der US-Patentschrift 3,530,721 beschrieben, die ursprüngliche Anmeldung dazu stammt bereits aus dem Jahre 1965.

Die Weiterentwicklung eines solchen Injektionsventils ist beispielsweise in der US-Patentschrift 4,242,909 erwähnt. Das Grundprinzip des dort gezeigten Ventils hat sich inzwischen in der HPLC weitgehend durchgesetzt. Da vorliegende Erfindung auf diesem Ventiltyp basiert, wird das Prinzip im Folgenden näher erläutert

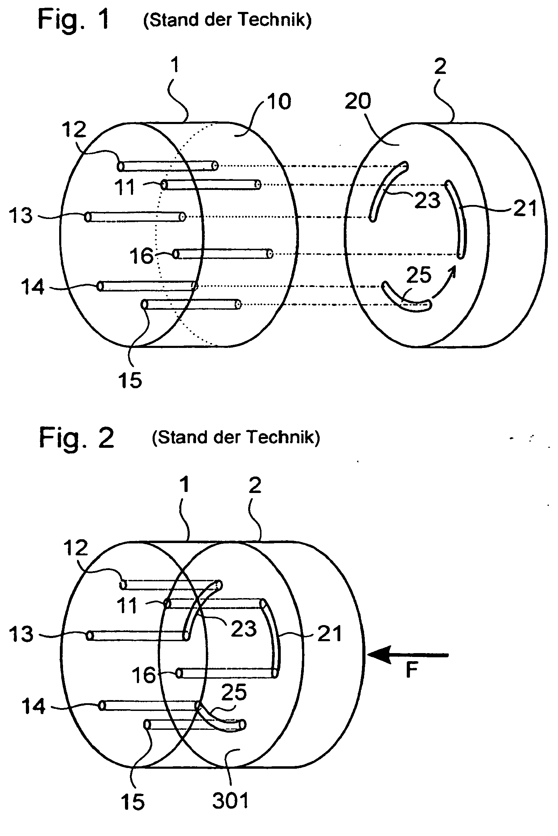

Fig. 1 zeigt in schematischer Darstellung ein solches Hochdruckventil nach dem Stand der Technik. Es besteht aus einem Stator 1 und einem Rotor 2. Der Stator 1 weist insgesamt sechs Ein- und Ausgangsports 11, 12, 13, 14, 15, 16 auf. Über diese Ports kann das Injektionsventil über Kapillarverbindungen mit den anderen Funktionselementen des HPLC-Systems verbunden werden. Die dafür benötigten Hochdruckverschraubungen sind der Übersichtlichkeit halber in Fig. 1 nicht dargestellt. Innerhalb des Ventils sind die Ports als Bohrungen ausgebildet, die zur anderen Seite 10 des Stators 1 führen. Abweichend von der vereinfachten Darstellung in den Zeichnungen ist bei praktisch realisierten Ventilen der Lochkreisdurchmesser auf der Seite der Hochdruckanschlüsse meist größer als auf der anderen Seite 10. Der Rotor weist eine Anzahl bogenförmiger Nuten 21, 23, 25 auf, die genau auf die Bohrungen der Ein- und Ausgangsports ausgerichtet sind. Dies ist in Fig. 1 durch punktierte Linien angedeutet Zur deutlicheren Darstellung ist in Fig. 1 der Rotor mit einem Abstand vom Stator gezeichnet. In zusammengebautem Zustand des Ventils ist dieser Abstand gleich Null, daher liegt die Oberfläche 20 des Rotors 2 unmittelbar auf der Oberfläche 10 des Stators 1, wie in Fig. 2 gezeigt.

Fig. 2 zeigt ein betriebsbereit zusammengebautes Ventil nach dem Stand der Technik. Der Rotor wird mit einer Andruckkraft, die durch den Pfeil F angedeutet ist, gegen den Stator gepresst, so dass sich eine gemeinsame Grenzfläche 301 zwischen Rotor 1 und Stator 2 ausbildet, an der die beiden Teile gegeneinander dichten. Die Andruckkraft F wird dabei so bemessen, dass die Anordnung auch bei den höchsten zu erwartenden Drücken noch dicht ist.

In der in Fig. 1 und Fig. 2 gezeigten ersten Schaltstellung des Ventils sind die Nuten 21,23,25 zu den Ein- und Ausgangsports 11 bis 16 so ausgerichtet, dass sie drei Verbindungen zwischen je zwei benachbarten Ein- und Ausgangsports herstellen, und zwar ist Port 11 überdie Nut21 mit Port 16 verbunden, Port 13 mit 12 sowie Port 15 mit 14. Aufgrund der Dichtwirkung an der Grenzfläche 301 kann also beispielweise über den Port 11 zugeführte Flüssigkeit ausschließlich an Port 12 austreten.

Zum Umschalten des Ventils In eine zweite Schaltstellung kann der Rotor gegenüber dem Stator um 60° verdreht werden, so dass die Nuten nun jeweils diejenigen Ports miteinander verbinden, die zuvor keine Verbindung hatten. Die Drehrichtung ist in Fig. 1 durch einen Pfeil auf dem Rotor angedeutet.

Die Umschaltung wird durch einen motorischen Antrieb ausgeführt der den Rotor 2 gegenüber dem Stator 1 verdrehen kann. Der Antrieb wurde der Übersichtlichkeit halber in den Zeichnungen weggelassen.

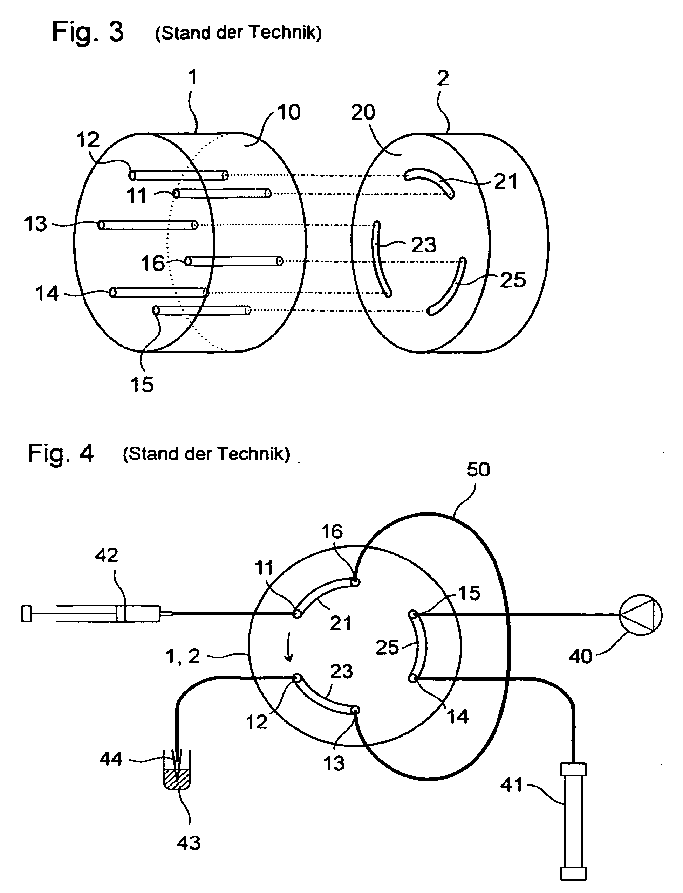

Fig. 3 zeigt ein Nochdruckventil nach dem Stand der Technik in einer zweiten Schaltstellung. Der Rotor 2 ist wie in Fig. 1 mit einem Abstand zum Stator gezeichnet, um eine bessere Erkennbarkeit zu erreichen. In betriebsbereit zusammengebautem Zustand des Ventils wird der Rotor dagegen analog zu Fig. 2 auf den Stator gepresst.

In dieser zweiten Schaltstellung sind die oben genannten Verbindungen unterbrochen, stattdessen ist Port 11 nun über die Nut 21 mit Port 12 verbunden, Port 13 mit Port 14 sowie Port 15 mit Port 16.

Der Vorteil derartiger Ventile besteht darin, dass sie bei ausreichend hoher Andruckkraft F für sehr hohe Drücke verwendbar sind. Außerdem können die Bohrungen der Ports 11, 12, 13, 14, 15, 16 so angeordnet werden, dass die Enden auf einem Kreis mit sehr geringem Radius liegen. Die Nuten 21, 23, 25 liegen dann ebenfalls auf einem Kreis mit sehr geringem Radius, so dass die Totvolumina des Ventils sehr klein gehalten werden können.

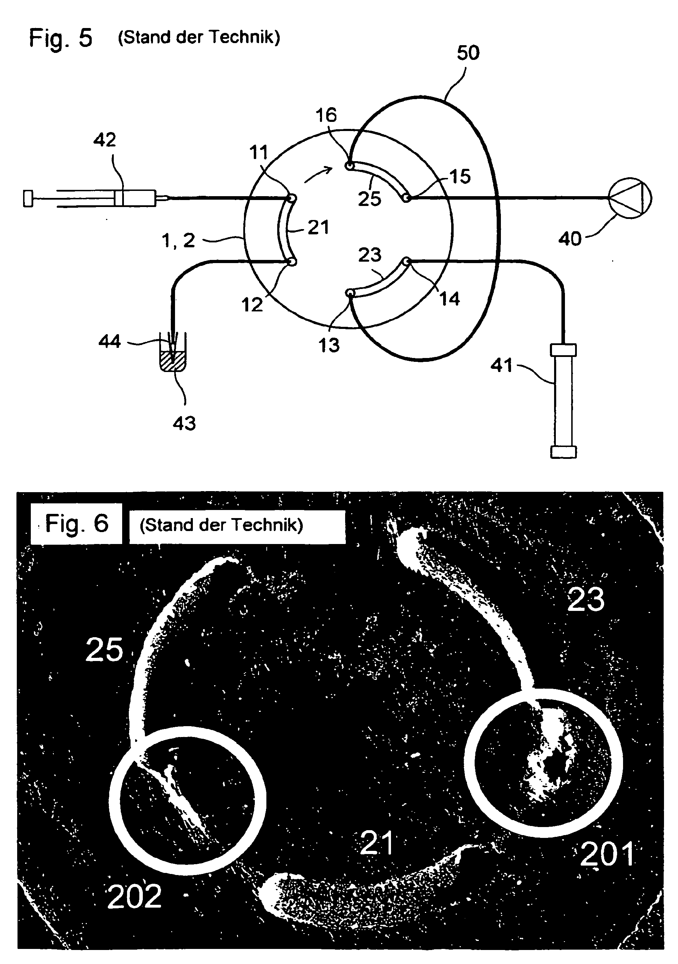

Hochdruck-Injektionsventile mit zwei Schaltstellungen und 6 Ports werden in der HPLC in der Regel verwendet, um Probenflüssigkeit in einen unter Hochdruck stehenden Flüssigkeitsstrom einzuspeisen. Ein gängiges Verfahren ist das sogenannte "Pulled Loop" Injektionsprinzip. Dieses wird anhand Fig. 4 und Fig. 5 schematisch und vereinfacht erläutert.

Fig. 4 zeigt ein Hochdruckventil nach dem Stand der Technik in Draufsicht, daher befinden sich Stator 1 und Rotor 2 unmittelbar hintereinander. Der Stator ist durchsichtig dargestellt, so dass die Stellung der Nuten 21, 23, 25 im Rotor erkennbar ist. Das Ventil befindet sich in einer ersten Schaltstellung, die Drehrichtung des Rotors in eine zweite Schaltstellung ist durch einen Pfeil angedeutet. An das Ventil sind über Kapillar rohre, die in Fig. 4 als dicke Linien dargestellt sind, die nachfolgend beschriebenen Komponenten angeschlossen.

An den Port 15 ist nun eine Hochdruckpumpe 40 angeschlossen, die eine konstante Flussrate bei hohem Druck liefern kann. In der gezeichneten Schattstellung des Ventils gelangt dieser Fluss durch die Nut 25 zum Port 14 und von dort zu einer chromatographischen Säule 41. An Port 12 ist eine Probennadel 44 angeschlossen, die gerade In einen Probenbehälter 43 eintaucht. Die Probennadel 44 kann statt in den Probenbehälter auch in einen Abfallbehälter bewegt werden, um überschüssige Flüssigkeit zu entsorgen. Der Abfallbehälter ist in den Zeichnungen nicht dargestellt, da es für die Erfäuterung der Erfindung keine Rolle spielt, ob sich die Probennadel 44 gerade im Proben- oder im Abfallbehälter befindet An Port 11 ist eine Spritze 42 zum Aufziehen von Probenflüssigkeit angeschlossen. Die beiden übrigen Ports 13, 16 sind über eine Probenschleife 50 extern miteinander verbunden. Dadurch kann mit Hilfe der Spritze 42 Probenflüssigkeit aus dem Probenbehälter 43 in die Probenschleife 50 gezogen werden. Die gezeichnete Schaltstellung des Ventils wird als Load-Position bezeichnet, da das Probenmaterial in die Probenschleife geladen wird. Hierfür wird in der weiteren Beschreibung abkürzend der Begriff Load verwendet. Um das Probenmaterial in den Hochdruck-Flüssigkeitsstrom einzuspeisen, wird das Ventil in eine zweite Schaltstellung umgeschaltet, die in Fig. 5 dargestellt ist.

Fig. 5 zeigt das Hochdruckventil nach dem Stand der Technik in gleicher Darstellung wie Fig. 4, jedoch in seiner zweiten Schaltstellung. Eine mögliche Drehrichtung des Rotors zurück in die erste Schaltstellung ist wiederum durch einen Pfeil angedeutet. Nun ist die Probenschleife 50 in den Flüssigkeitsweg zwischen Pumpe 40 und Säule 41 eingeschleift. Dadurch wird die zuvor in die Probenschleife 50 gezogene Probenflüssigkeit mit dem von der Pumpe 40 kommenden Flüssigkeitsstrom zur Säule 41 transportiert, wo die chromatographische Trennung stattfindet. Hinter der Säule sind in der Regel weitere Komponenten zur Analyse nachgeschaltet, die in Fig. 4 und Fig. 5 der Übersichtlichkeit halber weggelassen wurden. Die gezeichnete Schaltstellung des Ventils wird als INJECT-Position bezeichnet, da das Probenmaterial in den Hochdruck-Flüssigkeitsstrom injiziert wird. In der weiteren Beschreibung wird hierfür abkürzend der Begriff Inject verwendet

Das beschriebene Injektionsprinzip wird in der HPLC, teilweise in abgewandelter Form, standardmäßig verwendet. Die grundsätzliche Funktionsweise mit Load und Inject ist immer die gleiche, wobei unterschiedlichste Ausführungsformen verwendet werden. So ist beispielsweise in der US 4,939,943 ein Probengeber beschrieben, bei dem an Stelle der Spritze 42 eine Hochdruckspritze verwendet wird, die gleichzeitig einen Teil der Probenschleife 50 darstellt. Auch die Probennadel 44 ist dort Bestandteil der Probenschleife. Auch die benutzten Ventile können sich von der beschriebenen Ausführung unterscheiden, z.B. können weitere Ports für zusätzliche Funktionen vorhanden sein, außerdem kann die Anordnung der Nuten von dem in den Zeichnungen gezeigten Schema abweichen. Die Erfindung ist sinngemäß in gleicher Weise auch auf solche anderen Ausführungsformen von Probengebern anwendbar.

Als weiterer Stand der Technik ist eine spezielle Bauform von Hochdruck-Ventilen zu erwähnen. Solche Ventile sind von Fa. Rheodyne LLC, Kalifornien kommerziell erhältlich z.B. Model 7710 und 9710 und erlauben ein nahezu unterbrechungsfreies Umschalten des Pumpenflusses.

Das Grundprinzip derartiger Ventile nach dem Stand der Technik entspricht weitestgehend Fig. 1 bis Fig. 5 und soll anhand Fig. 4 erklärt werden. Zusätzlich zu den im Rotor 2 befindlichen Nuten 21, 23, 25 befindet sich bei diesem Ventiltyp auch im Stator 1 eine einzelne Nut, die ausgehend von Port 14 im Stator parallel zu Nut 25 verläuft, jedoch bereits vor der Bohrung von Port 15 endet.

Während des Umschaltvorgangs von der Load-Position in die INJECT-Position bleibt durch diese Nut die direkte Verbindung zwischen Port 15 und 14 zunächst erhalten. Erst unmittelbar bevor die Nut 25 die Verbindung zwischen Port 15 und 16 herstellt, wird die direkte Verbindung unterbrochen. Die gleiche Wirkung kann auch erreicht werden, indem die Drehrichtung umgedreht wird und die Nut von Port 15 ausgeht und bereits vor der Bohrung von Port 14 endet. Diese Funktion wird vom Hersteller als "Make Before Break" bezeichnet, da die bestehende Verbindung erst unterbrochen wird, wenn die neue Verbindung hergestellt wird.

Ein ähnliches Injektions-Hochdruckventil bzw. ein damit realisierter Probengeber für die HPLC ist auch in der WO 2006/083776 A2 beschrieben. Diese Schrift befasst sich mit der Vermeidung von Druckschwankungen, die durch Probengeber, bzw. Schaltvorgänge in den Hochdruck-Injektionsventilen erzeugt werden, welche auf die Chromatographiesäule einwirken und diese beeinträchtigen bzw. zerstören. Als Lösung wird ein Hochdruck-Injektionsventil angegeben, welches zusätzlich zu den im Rotorvorgesehenen Nuten auch im Stator zumindest eine zusätzliche Nut aufweist, die dazu dient, die Verbindung der beiden Hochdruck-Ports, an welchen die Pumpe und die Säule angeschlossen sind, bei einem Umschalten von LOAD auf INJECT möglichst lange aufrecht zu erhalten. Diese Verbindung wird sogar noch aufrecht erhalten, wenn bereits die dauernd mit einem der Probenschleifen-Ports verbundenen Nut ebenfalls den Pumpen-Port erreicht, so dass gleichzeitig die zunächst drucklose Probenschleife mit dem Pumpendruck beaufschlagt wird. Anschließend werden erst im letzten Winkelbereich der Drehbewegung des Rotors die Hochdruck-Ports getrennt und der Säulen-Port mit dem jeweils anderen Probenschleifen-Port verbunden. Auf diese Weise wird in der Säule praktisch keine Druckänderung mehr während der Schaltvorgänge erzeugt Die Säule wird nahezu immer mit dem Pumpendruck beaufschlagt. Beim Umschalten von INJECT auf LOAD ist in dieser Schrift aufgezeigt, dass die Probenschleife in definierter Weise dadurch dekomprimiert werden kann, dass durch eine entsprechende Verlängerung der Nut im Rotor oder durch das Vorsehen einer im Stator ausgebildeten Statomut erst der mit der Spritze verbundene Port mit der auf ihn zu bewegten Rotomut und damit mit dem betreffenden Probenschleifen-Port verbunden wird, bevor der andere Probenschleifen-Port mit dem mit der Probennadel verbundenen Port verbunden wird. Durch dieses Voreilen wird zwar eine definierte Dekompression der Probenschleife erreicht, jedoch ergeben sich auch hier die nachstehend beschriebenen kritischen Schaltzustände, in denen eine Fluidströmung von einer Nut in einen engen Port auftritt, welche zu Schäden im Rotor und/oder Stator führen kann.

In der HPLC ist in den letzten Jahren ein Trend zu Trennsäulen mit geringerer Partikelgröße zu beobachten. Derartige Trennsäulen ermöglichen eine bessere Trennleistung und eine schnellere Trennung, weshalb man von Fast-HPLC spricht.

Da mit sinkender Partikelgröße der Flusswiderstand sehr stark ansteigt, sind für die Fast-HPLC erheblich höhere Drücke erforderlich. Der maximal auftretende Säulendruck liegt bei konventioneller HPLC typischerweise zwischen 100 und 400 bar, während bei der Fast-HPLC meist 600 bis 700 bar erforderlich sind, teilweise sogar über 1000 bar. Es zeichnet sich bereits ein Trend zu Säulen mit noch besserer Trennleistung ab, die sogar noch höhere Drücken bis ca. 2000 bar erfordern.

Um Hochdruck-Injektionsventile bei derart hohen Drücken betreiben zu können, muss die Anpresskraft F (siehe Fig. 2) entsprechend erhöht werden, damit das Ventil dicht ist. Damit der Rotor, der aus Kosten- und technischen Gründen normalerweise aus Kunststoff gefertigt wird, dieser Kraft standhält, verwendet man nach dem Stand der Technik glas- oder kohlefaserverstärkte Kunststoffe. Weiterhin kommt es durch die erhöhte Anpresskraft F zu einer erhöhten Materialbeanspruchung und folglich übermäßiger Abnutzung, so dass die Lebensdauer des Ventils (Zahl der Schaltspiele) unbefriedigend ist

Dieses Problem kann durch entsprechende Materialwahl bzw. Beschichtung gelöst werden. So ist in der US 6,453,946 eine spezielle Beschichtung beschrieben, die eine kostengünstige Herstellung von Rotor und Stator erlaubt und gleichzeitig den Verschleiß der Materialien stark verringert.

Es hat sich jedoch gezeigt, dass sich solche verbesserten Ventile zwar günstiger verhalten, aber bei Betrieb mit sehr hohen Drücken dennoch bereits nach einer relativ geringen Anzahl von Schaltzyklen ausfallen.

Die nähere Untersuchung solcher ausgefallener Ventile nach dem Stand der Technik hat gezeigt, dass die Ausfälle hauptsächlich durch Materialabtrag an bestimmten Stellen des Rotors verursacht werden. Fig. 6 zeigt ein Foto eines solchen, beschädigten Rotors. Die Nuten 21, 23, 25 erscheinen durch die seitliche Beleuchtung schattiert. Die beschädigten Bereiche 201, 202 sind durch Kreise gekennzeichnet und liegen in der Verlängerung der Nuten 23 und 25. Bei der Beschädigung 201 ist in der Oberfläche des Rotors ein tiefes Loch entstanden.

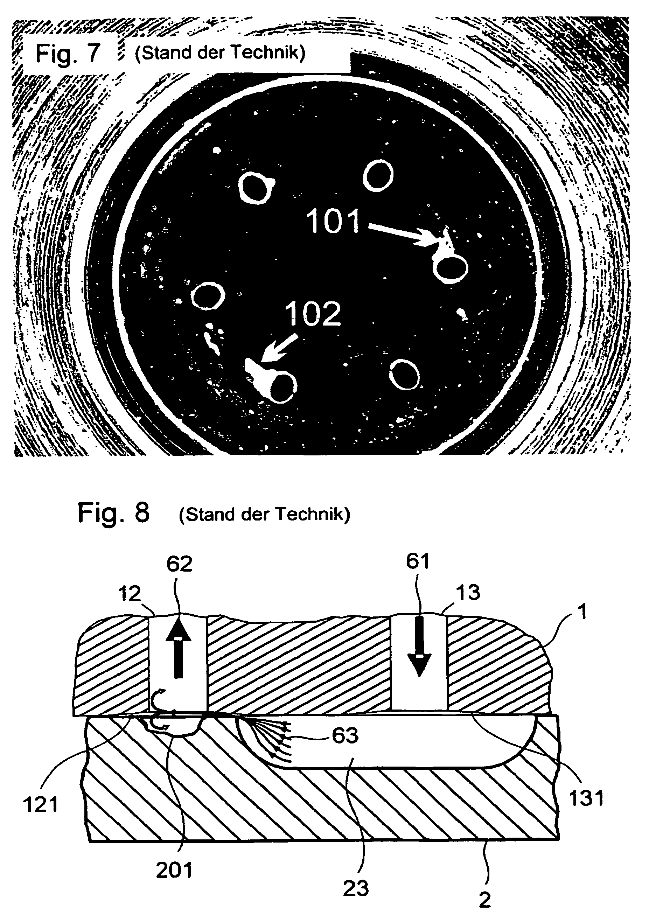

Weiterhin wurde festgestellt, dass auch am Stator Schäden entstehen, und zwar in der Umgebungen der Bohrungen für die Ports. Fig. 7 zeigt das Foto eines derart beschädigten Stators mit den beschädigten Bereichen 101, 102.

Die Entstehung derartiger Schäden kann wie folgt erklärt werden:

In der INJECT-Position Fig. 5 stehen die Probenschleife 50 und die Nuten 23 und 25 unter Hochdruck. Während des Umschaltvorgangs in die LOAD-Position (Fig. 4) bleibt die Nut 23 unter Hochdruck, da die Probenschleife aufgrund der Kompressibilität des darin enthaltenen Lösungsmittels den Druck aufrecht erhält. Fig. 8 zeigt in seitlicher Ansicht die Stellung der Nut 23 kurz vor Ende des Umschaltens von Inject nach Load, wenn der Schaden im Rotor entsteht. Die Krümmung der Nut 23 ist dabei zeichnerisch nicht berücksichtigt. Vom Rotor 2 ist nur der Bereich um die Nut 23 gezeigt, vom Stator 1 der Bereich zwischen den Ports 12 und 13.

Der Übergang von den Bohrungen der Ports 12,13 zur Dichtfläche des Stators 1 weist - wie auch bei allen anderen Ports 11 bis 16 - jeweils eine Fase 121, 131 auf. Hierdurch werden scharfe Kanten oder gar Grate vermieden, die den Rotor beschädigen könnten. In der in Fig. 8 gezeigten Position hat die Nut 23 gerade eben die Fase 121 erreicht, so dass sich zwischen dem Nutende und dem Port 12 gerade eben ein winziger Durchlass bildet.

Die Probenschleife 50 und somit auch die Nut 23 stehen noch unter nahezu vollem Druck, während der Port 12 mit dem Probenbehälter 43 oder Abfallbehälter verbunden ist und daher normalen Luftdruck aufweist. Somit wirkt zunächst die gesamte Druckdifferenz auf den winzigen Durchlass, welcher gleichzeitig nur eine sehr geringe Länge aufweist.

Dieser "Engpass" führt wie bei einer Düse zu außerordentlich hohen Strömungsgeschwindigkeiten, und die aufgrund der Kompressibilität des Lösungsmittels In der Probenschleife gespeicherte Energie wird in kinetische Energie umgewandelt. Dabei entsteht wie z.B. beim Wasserstrahlschneiden eine sehr hohe Energiedichte, die in der Nähe befindliches Material zerstören kann.

In Fig. 8 ist das von der Probenschleife einströmende Lösungsmittel durch einen Pfeil 61 gekennzeichnet, das in Richtung Probenbehälter oder Abfallbehälter ausströmende Lösungsmittel durch einen Pfeil 62 und der Strömungsverlauf an der Fase 121 durch ein Bündel von Pfeilen 63. Die Strömung, die an der Fase den Engpass überwindet, trifft mit extrem hoher Geschwindigkeit auf den gegenüberliegenden Rand der Fase und wird dort so abgelenkt, dass eine kleine Menge Rotormaterial an dieser Stelle geradezu ausgewaschen wird. Dieser Vorgang wiederholt sich mit jedem Schaltzyklus, so dass sich der Schaden akkumuliert, was zu dem in Fig. 6 gezeigten Loch 201 führen kann.

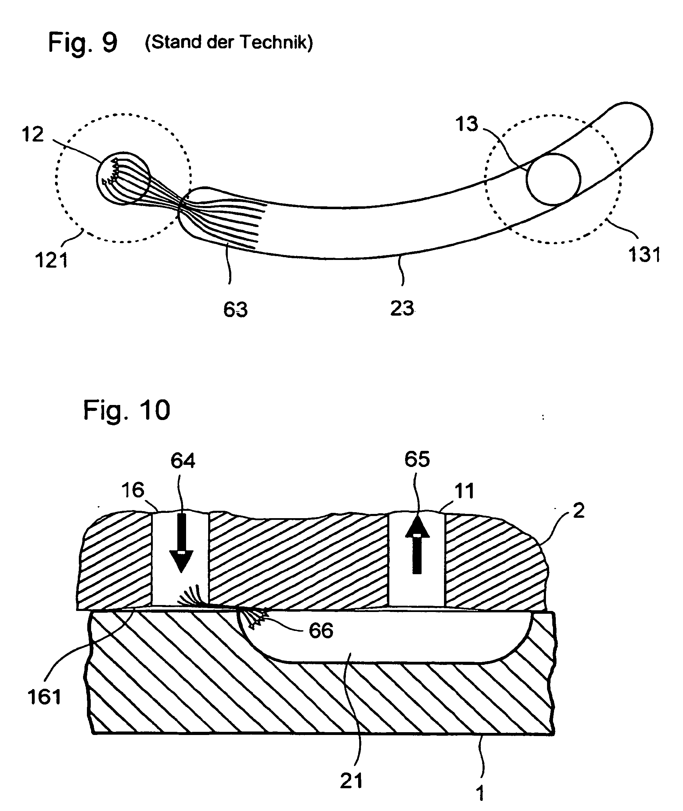

Fig. 9 zeigt den Strömungsverlauf 63 wie Fig. 8, jedoch in einer Ansicht senkrecht von oben. In dieser Darstellung ist erkennbar, dass die Strömung 63 beim Auftreffen auf den gegenüberliegenden Rand der Fase 121 durch die gekrümmte Form der Fase sozusagen auf die Schadensstelle fokussiert wird, was den schädlichen Effekt noch verstärkt.

Der in Fig. 8 gezeigte Effekt tritt beim Zurückschalten von Load- nach Inject ebenfalls auf, wenn die Nut 25 den Port 16 erreicht. In diesem Moment ist die Probenschleife 50 drucklos, da sie in der LOAD-Position mit dem Probenbehälter 43 verbunden war. Die Nut 25 steht dagegen unter dem vollen Druck der Pumpe. Dies führt zu den in Fig. 6 gezeigten Beschädigungen 202 am Ende der Nut 25. Die einzelnen Schadensbilder unterscheiden sich etwas, weil hierauf auch die angeschlossenen Komponenten (z.B. Flusswiderstände, gespeicherte fluidische Energie) einen Einfluss haben.

Wie in Fig. 6 zu erkennen, tritt das Problem an den übrigen Nutenden nicht auf, obwohl auch dort teilweise bei den Schaltvorgängen die gleichen Druckunterschiede zwischen den betreffenden Ports wirksam sind. So erreicht beispielsweise beim Umschalten von Inject nach Load die drucklose Nut 21 den Port 16, welcher mit der Probenschleife 50 verbunden ist, die unter Druck steht. Dennoch tritt am Ende der Nut 21 keine Beschädigung auf.

Dies kann anhand von Fig. 10 wie folgt erklärt werden:

Fig. 10 zeigt in gleicher Darstellung wie Fig. 8 die Situation kurz vor Erreichen der LOAD-Position, also bevor die Nut 21 den Port 16 erreicht. Hier tritt die Strömung 64 über den Port 16 ein, fließt dann durch den Engpass an der Fase 161 in die Nut 21 und tritt als Strömung 65 an Port 11 wieder aus. Auch hier gibt es am Übergang vom Port 16 zur Nut 21 einen Engpass, an dem eine hohe Druckdifferenz wirksam ist und somit extrem hohe Strömungsgeschwindigkeiten auftreten.

Der wesentliche Unterschied zu Fig. 8 besteht darin, dass die Strömung 66 diesen Engpass in umgekehrter Richtung durchfließt wie die Strömung 63. Dadurch trifft die Strömung nicht auf den gegenüberliegenden Rand der Fase 161 und auch sonst auf kein festes Material, sondern lediglich auf die in der Nut 21 befindliche Flüssigkeit. Hierdurch wird die Strömung so stark gebremst bzw. die kinetische Energie abgebaut, dass die restliche kinetische Energie zu gering ist, um Materialschäden auszulösen.

Somit kann davon ausgegangen werden, dass unter sonst gleichen Bedingungen ein Schaltvorgang mit umgekehrter Strömungsrichtung unschädlich ist Diese Erkenntnis wird, wie weiter unten erläutert, für die erfindungsgemäße Lösung des Problems genutzt.

Allerdings ergibt sich bei der in Fig. 10 gezeigten Situation, also beim Erreichen der LOAD-Position, ein unerwünschter Druckstoß auf die an Port 11 angeschlossene Spritze 42, da sich in diesem Moment der Druck in der Probenschleife 50 über Port 11 entlädt.

Die in Fig. 4 und Fig. 5 gezeigten Schaltrichtungen des Ventils sind nach dem Stand der Technik nicht zwingend vorgegeben, vielmehr kann das Umschalten von der LOAD- in die INJECT-Position auch in umgekehrter Drehrichtung des Rotors erfolgen. In diesem Fall werden die Beschädigungen zwar an den genannten Stellen vermieden, dafür treten aber an anderen Stellen gleichartige Schäden auf. Diese lassen sich analog zur obigen Betrachtung erklären.

Die bisherigen Erläuterungen erklären zwar die auftretenden Schäden im Rotor 2, nicht aber die in Fig. 7 gezeigten Schäden im Stator 1. Diese können wie folgt erklärt werden:
Die Rotoren 2 bestehen, wie bereits erläutert, in der Regel aus faserverstärkten Kunststoffen. Bei der Herstellung der Nuten 21, 23,25 lässt sich nicht vollständig vermeiden, dass Enden der Fasern aus dem Kunststoff hervorstehen. Solche vorstehenden Fasern befinden sich auch und besonders in der Nähe der Ränder der Nuten, also im zusammengebauten Zustand des Ventils in unmittelbarer Nähe der Oberfläche des Stators 1. Strömt das Lösungsmittel, wie in Fig. 8 gezeigt, von der Nut 23 zum Port 12, so befinden sich die an der linken Oberkante der Nut 23 hervorstehenden Faserenden genau dort, wo die Strömung 63 mit extrem hoher Geschwindigkeit den Engpass passiert. Dadurch werden die Faserenden In den Engpass gedrückt und verursachen dort abrasive Schäden, vor allem weil der Rotor 2 während des Schaltens des Ventils gegen den Stator 1 bewegt wird.

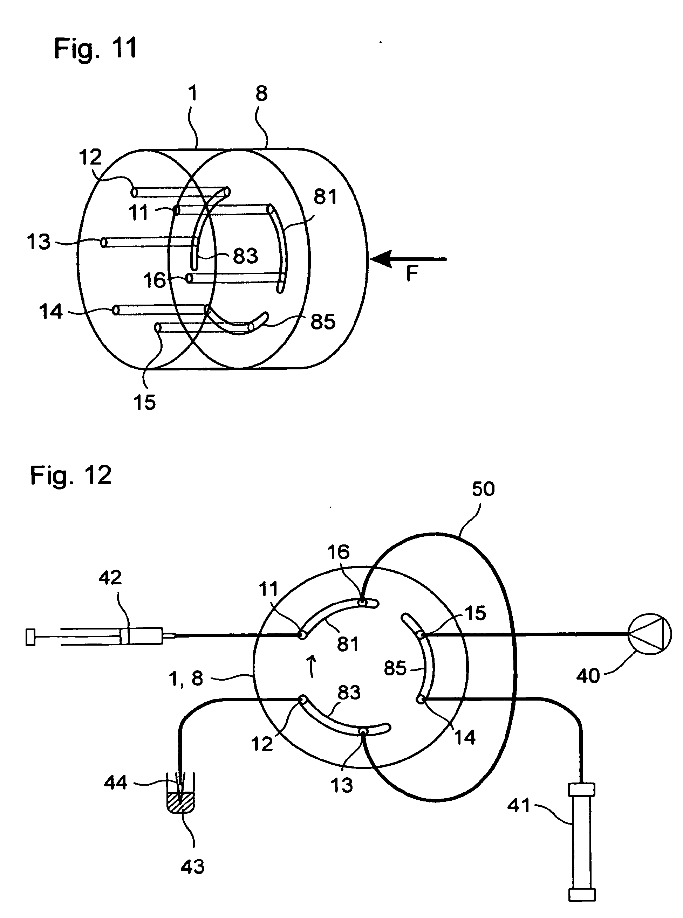

Auch diese Schäden entstehen nicht, wenn die Strömungsrichtung wie in Fig. 11 umgekehrt ist. In diesem Fall werden die Enden der vorstehenden Fasern durch die Strömung 66 nach rechts, also in Richtung der Mitte der Nut 21 ausgerichtet, wo sie keine Schäden durch Abrasion erzeugen können.

Aus diesem Grund entstehen die in Fig. 7 gezeigten Schäden 101, 102 an den gleichen Ports, an denen auch die in Fig. 6 gezeigten Schäden 201, 202 auftreten, nämlich Port 12 und 16.

Der beschriebene Schädigungsmechanismus ist nur wirksam, wenn an einem der beteiligten Ports die in Fig. 8 dargestellte Situation eintritt. Dies ist nur während der Umschaltvorgänge von Load nach Inject und umgekehrt für einen kurzen Moment der Fall. Daher könnte eine Verbesserung dadurch erzielt werden, dass man diesen Umschaltvorgang beschleunigt. Auf diese Weise könnte die Dauer der kritischen Situation verringert und somit die Schäden reduziert werden. Allerdings kann auf diese Weise der Schaden nicht völlig vermieden, sondern nur in genau dem Maße verringert werden, wie die Schaltgeschwindigkeit erhöht wird. Der Spielraum für eine noch höhere Schaltgeschwindigkeit ist aber gering, da dies den Aufwand und folglich die Kosten stark in die Höhe treiben würde.

Ein weiterer Lösungsansatz könnte darin bestehen, die Form der Fasen 121, 131 zu verändern und insbesondere zu vergrößern, so dass die Strömung weniger stark auf den Rotor gelenkt wird. Auch hier besteht aber nur ein geringer Spielraum, da die Fasen bei Ventilen nach dem Stand der Technik darauf optimiert sind, dass durch den Schaltvorgang möglichst wenig Abrieb auftrifft und dass die Totvolumina so klein wie möglich sind. Zudem würden durch einen solchen Lösungsansatz allenfalls die Schäden 201, 202 im Rotor vermieden, nicht jedoch die Schäden 101, 102 im Stator. Aufgabe vorliegender Erfindung ist es somit, einen Probengeber für die HPLC zu schaffen, bei dem das erforderliche Umschalten von Flüssigkeitsströmen mittels eines Hochdruck-Injektionsventils zwischen sehr hohen Druckdifferenzen ermöglicht ist, wobei gleichzeitig eine ausreichende Lebensdauer des Hochdruck-Injektionsventils gewährleistet ist Der Probengeber und insbesondere das von diesem umfasste Hochdruck-Injektionsventil soll dabei einen einfach zu realisierenden Aufbau aufweisen. Zusätzliche Totvolumina sollen möglichst vermieden werden.

Die Erfindung löst diese Aufgabe mit den Merkmalen des Patentanspruchs 1.

Der Erfindung liegt die Erkenntnis zugrunde, dass beim Stand der Technik die Hochdruck-Injektionsventile zumindest teilweise durch eine ungeeignete Wahl der Schaltrichtung, d.h. der Richtung der Drehbewegung des Rotors, beschädigt werden, wenn sehr hohe Druckdifferenzen zu schalten sind, und dass diese Beschädigungen vermieden werden können, wenn die Geometrie der Ventilkomponenten in geeigneter Weise angepasst wird und wenn die Beschaltung des Ventils so festgelegt wird, dass die Schaltvorgänge nicht in einer schädlichen Richtung erfolgen. Erfindungsgemäß wird insbesondere eine Beschädigung des Ventils beim Schalten von INJECT auf LOAD dadurch vermieden, dass die zumindest drei Nuten und/oder die Port-Öffnungsquerschnitte so vorgesehen und ausgebildet sind und die Drehrichtung so gewählt ist, dass bei einem Drehen des Rotors aus der INJECT-Position in die LOAD-Position die unter Hochdruck stehende Probenschleife in der Weise dekomprimiert wird,
(a) dass die Nuten und/oder die Port-Öffnungsquerschnitte so ausgebildet und angeordnet sind, dass zuerst die Verbindung zwischen demjenigen Probenschleifen-Port und demjenigen Load-Port hergestellt und aufrechterhalten wird, die durch die Bewegung der mit dem betreffenden Load-Port dauernd verbundenen Nut in Richtung auf den betreffenden Probenschleifen-Port entsteht, bevor die Verbindung zwischen dem anderen Probenschleifen-Port und dem anderen Load-Port hergestellt und aufrechterhalten wird, die durch die Bewegung der mit dem betreffenden Probenschleifen-Port dauernd verbundenen Nut In Richtung auf den betreffenden Load-Port entsteht (Funktion des Vorauseilens zur Dekomprimierung der Probenschleife),
   oder
(b) dass eine weitere Entspannungsnut (66) im Rotor (2) vorgesehen ist, die so ausgebildet ist, dass vor dem Erreichen der LOAD-Position in einer bestimmten Drehposition oder über einen bestimmten Winkelbereich hinweg eine Verbindung zwischen demjenigen Probenschleifen-Port (13) und demjenigen Load-Port (11) hergestellt und aufrechterhalten wird, welche nicht dauernd mit einer Nut verbunden sind, wobei das Ende der Entspannungsnut (66), welches mit dem Probenschleifen-Port (13) verbunden wird, und/oder der Port-Öffnungsquerschnitt, über einen ausreichend langen Entspannungsbereich konzentrisch und in Umfangsrichtung verlaufen, der so bemessen ist, dass die Strömungsgeschwindigkeiten der Fluidströmung, die beim Erreichen der Überdeckung von Entspannungsnut (66) und Port-Öffnungsquerschnitt entsteht, im Entspannungsbereich so weit reduziert werden, dass eine Beschädigung des Stators (1) und/oder des Rotors (2) vermieden wird.

Der Probenschleifen-Port, der zur definierten Dekompression als erster mit dem betreffenden, niederdruckseitigen Port verbunden wird, steht dabei unter Hochdruck, so dass sich in jedem Fall eine Strömung vom Port in Richtung in die betreffende Nut bzw. Entspannungsnut erzeugt wird. Auf diese Weise werden Schäden im Rotor und Stator auch bei extrem hohen Drücken vermieden.

An dieser Stelle sei darauf hingewiesen, dass theoretisch die zumindest drei Nuten nicht über die gesamte Länge in Umfangsrichtung und konzentrisch zur Drehachse verlaufen müssen. Zumindest in den (engeren) Winkelbereichen, innerhalb welcher diejenigen Positionen von Stator und Rotor zueinander liegen, in welchen eine Fluidströmung erfolgen soll, müssen die die Nuten bzw. die nutförmigen Erstreckungen der Port-Querschnittsöffnungen in Umfangsrichtung und konzentrisch zur Drehachse verlaufen. Bei einer derartigen Ausbildung eines Hochdruck-Injektionsventils existieren auch keine Nuten mehr, die dauernd mit einem Port verbunden sind. Auch bei derartigen Formen wird jedoch der Vorteil erreicht, dass hohe Druckdifferenzen nur in der Weise geschaltet werden, dass sich eine Fluidströmung von einem unter Hochdruck stehendem Port oder sich nutförmig erstreckenden Portöffnungsquerschnitt in eine annähernd drucklose Nut ergibt, die zumindest in einem ausreichend langen Entspannungsbereich in Umfangsrichtung verläuft.

Im Rahmen dieser Schrift fallen solche Ausführungsformen, wonach Ports während einer Schaltbewegung dauernd mit einer Nut verbunden sind. Hierunter sind auch solche Ausführungsformen zu subsumieren, bei denen nur in maßgeblichen Positionen von Stator und Rotor zueinander, die betreffenden Ports mit den jeweiligen Nuten verbunden sind.

Nach einer Ausgestaltung der Erfindung kann diejenige Nut, die beim Umschalten von der INJECT-Position auf die LOAD-Position unter Aufrechterhalten der Verbindung zu dem betreffenden Load-Port auf den benachbarten Probenschleifen-Port zu bewegt wird (Load-Port-Nut), gegenüber derjenigen Nut vorauseilend ausgebildet sein, welche während der Umschaltbewegung mit dem anderen der Probenschleifen-Ports verbunden ist und diesen in der LOAD-Position mit dem anderen der Load-Ports verbindet.

Nach einer anderen Ausgestaltung der Erfindung kann sich der Port-Öffnungsquerschnitt des Load-Ports, welcher nicht dauernd mit einer Nut verbunden ist, nutförmig in Richtung auf diejenige Nut erstrecken, die beim Umschalten von der INJECT-Position auf die LOAD-Position unter Aufrechterhalten der Verbindung zu dem betreffenden Load-Port auf diesen Probenschleifen-Port zu bewegt wird, wobei die Länge der nutförmigen Erstreckung des Port-Öffnungsquerschnitts so gewählt ist, dass die Funktion des Vorauseilen zur Dekomprimierung der Probenschleife realisiert ist

Hierdurch ergibt sich der Vorteil, dass keine Verlängerung der betreffenden Rotomut erforderlich ist, so dass insbesondere in Verbindung mit einer gleichzeitigen Verlängerung der benachbarten Rotomut auf die betreffende Rotomut zu, wie sie zur Realisierung nachstehend beschriebener vorteilhafter Ausführungsformen erforderlich sein kann, keine Dichtigkeitsprobleme durch eng benachbarte Nutenenden entstehen können.

Nach einer weiteren Ausgestaltung der Erfindung kann diejenige Nut, welche in der Load-Position die beiden Hochdruck-Ports verbindet, so lang ausgebildet sein, dass die beiden Hochdruck-Ports In derjenigen Drehposition, in welcher die Dekompression der Probenschleife stattfindet, oder über den gesamten Winkelbereich der Drehbewegung, in welchem die Dekompression der Probenschleife stattfindet, verbunden sind. Hierdurch wird der Druckabfall in der Säule während der Schaltbewegung, insbesondere während des Dekompressionsvorgangs der Probenschleife, minimiert.

Dieser Vorteil lässt sich auch bei einer alternativen Ausführungsform der Erfindung erreichen, bei der sich der Port-Öffnungsquerschnitt des Hochdruck-Ports, welcher während des Umschaltvorgangs nicht dauernd mit einer Nut verbunden ist, nutförmig in Richtung auf diejenige Nut erstreckt, die beim Umschalten von der INJECT-Position auf die LOAD-Position unter Aufrechterhalten der Verbindung zu dem betreffenden Load-Port auf diesen Hochdruck-Port zu bewegt wird, wobei die Länge der nutförmigen Erstreckung des Port-Öffnungsquerschnitts so gewählt ist, dass die beiden HochdruckPorts (14,15) in derjenigen Drehposition, in welcher die Dekompression der Probenschleife stattfindet, oder über den gesamten Winkelbereich der Drehbewegung, in welchem die Dekompression der Probenschleife stattfindet, verbunden sind.

Nach der Erfindung wird auch bei einem Drehen des Rotors aus der LOAD-Position in die INJECT-Position die im Wesentlichen drucklose Probenschleife in der Weise mit Hochdruck beaufschlagt, wobei die Drehrichtung so gewählt ist und die Nuten und/oder die Port-Öffnungsquerschnitte so ausgebildet und angeordnet sind,
(a) dass zuerst die Verbindung zwischen einem der Hochdruck-Ports und demjenigen Probenschleifen-Port hergestellt und aufrechterhalten wird, welcher während der Umschaltbewegung dauernd mit einer Nut verbunden ist, wobei hierzu die mit diesem Probenschleifen-Port dauernd verbundene Nut in Richtung auf den Pumpen-Port bewegt wird, und
(b) dass erst anschließend die Verbindung zwischen dem andern Hochdruck-Port und dem anderen Probenschleifen-Port hergestellt und aufrechterhalten wird, wobei hierzu die während der Umschaltbewegung dauernd mit dem anderen Hochdruckport verbundene Nut in Richtung auf den betreffenden Probenschleifen-Port bewegt wird (Funktion des Vorauseilens zur Druckbeaufschlagung der Probenschleife).

Hierdurch ist gewährleistet, dass das Druckbeaufschlagen der Probenschleife an der Seite beginnt, an welcher die Pumpe eine Fluidströmung von einem druckbeaufschlagten Port in Richtung auf eine zunächst drucklose Nut erzeugt. Nachdem die Probenschleife unter Druck gesetzt wurde, kann dann die noch unter dem Säulendruck stehende Nut mit dem anderen Probenschleifen-Port ohne die Gefahr einer Beschädigung des Rotors bzw. Stators verbunden werden, da die Druckdifferenz infolge der geringen Schaltzeit, innerhalb der der Säulendruck nur geringfügig absinkt, relativ gering ist.

Dieses Vorauseilen der Verbindung des Pumpen-Ports mit dem betreffenden Ende der Probenschleife gegenüber dem Verbinden des anderen Endes der Probenschleife mit dem Säulen-Port kann dadurch erzeugt werden, dass diejenige Nut, die beim Umschalten von der LOAD-Position auf die INJECT-Position unter Aufrechterhalten der Verbindung zu dem betreffenden Probenschleifen-Port auf den benachbarten Hochdruck-Port zu bewegt wird (Probenschleifen-Port-Nut), gegenüber derjenigen Nut vorauseilend ausgebildet Ist, welche während der Umschaltbewegung mit dem anderen der Hochdruck-Ports verbunden ist und diesen in der INJECT-Position mit dem anderen der Probenschleifen-Ports verbindet.

Nach einer anderen Ausführungsform kann hierzu das Hochdruck-Injektionsventil auch so gestaltet sein, dass sich der Port-Öffnungsquerschnitt des Hochdruck-Ports, welcher während des Umschaltvorgangs nicht dauernd mit einer Nut verbunden ist, nutförmig in Richtung auf diejenige Nut erstreckt, die beim Umschalten von der LOAD-Position auf die INJECT-Position unter Aufrechterhalten der Verbindung zu dem betreffenden Load-Port auf diesen Hochdruck-Port zu bewegt wird, wobei die Länge der nutförmigen Erstreckung des Port-Öffnungsquerschnitts so gewählt ist, dass die Funktion des Vorauseilens zur Druckbeaufschlagung der Probenschleife realisiert ist.

Selbstverständlich kann das Vorauseilen in diesem Falle, ebenso wie bei der Dekompression der Probenschleife, auch durch eine Kombination dieser Maßnahmen erzeugt werden, d.h. durch eine entsprechende Verlängerung der jeweiligen Nut und gleichzeitig durch eine sich der betreffenden Nut vom jeweiligen Port entgegenstreckende Nut im Stator.

Nach der bevorzugten Ausführungsform der Erfindung weist das Hochdruck-Injektionsventil eine ansteuerbare Antriebseinheit für die Drehbewegung des Rotor und eine Steuereinheit auf. Hierdurch lässt sich ein automatischer Probengeber realisieren.

Die Steuereinheit kann die Antriebseinheit derart ansteuern, dass die Dekompression der Probenschleife beim Umschalten von der INJECT-Position in die LOAD-Position über den vorbestimmten Probenschleifen-Port im Wesentlichen vollständig erfolgt. Hierzu kann die Steuereinheit die Geschwindigkeit der Drehbewegung so beeinflussen, dass die Zeitdauer, über welche eine Dekompression der Probenschleife über den gewünschten Port erfolgen kann, ausreicht, um eine im Wesentlichen vollständige Dekompression zu gewährleisten. Insbesondere kann die Steuereinheit hierzu die Drehbewegung über den Winkelbereich, in dem eine Dekompression möglich ist, verlangsamen oder die Drehbewegung in diesem Winkelbereich für eine vorgegebene Zeitspanne stoppen.

In analoger Weise kann die Steuereinheit die Antriebseinheit derart ansteuern, dass die Druckbeaufschlagung der Probenschleife beim Umschalten von der LOAD-Position in die INJECT-Position über den vorbestimmten Probenschleifen-Port im Wesentlichen vollständig erfolgt. Die Steuereinheit kann auch zu diesem Zweck die Geschwindigkeit der Drehbewegung so beeinflussen, dass die Zeitdauer, über welche eine Druckbeaufschlagung der Probenschleife über den gewünschten Port erfolgen kann, ausreicht, um eine im Wesentlichen vollständige Druckbeaufschlagung zu gewährleisten. Die Steuereinheit kann hierfür die Drehbewegung über den Winkelbereich, in dem eine Druckbeaufschlagung möglich Ist, verlangsamen oder die Drehbewegung in diesem Winkelbereich für eine vorgegebene Zeitspanne stoppen.

Damit können erfindungsgemäß mit minimalem Zusatzaufwand gegenüber vorbekannten Probengebem bzw. Ventilen die beschriebenen Schäden an den Ventilen vollständig vermieden werden. Die Lebensdauer eines erfindungsgemäßen Hochdruck-Injektionsventils ist daher nur durch den unvermeidlichen Abrieb zwischen Rotor und Stator sowie ggf. die abrasive Wirkung von Partikeln, z.B. Schmutz oder Probenmaterial, begrenzt.

Weitere Ausführungsformen ergeben sich aus den Unteransprüchen.

Die Erfindung wird nachfolgend anhand in der Zeichnung näher dargestellter Ausführungsformen näher erläutert. In der Zeichnung zeigen:
- Fig. 1: ein Hochdruck-Injektionsventil nach dem Stand der Technik in schematischer perspektivischer Explosionsdarstellung, welches sich in einer ersten Schaltstellung befindet;
- Fig. 2: das betriebsbereit montierte Hochdruck-Injektionsventil in Fig. 1 in schematischer perspektivischer Darstellung;
- Fig. 3: das Hochdruck-Injektionsventil in den Fig. 1 und 2 in schematischer perspektivischer Explosionsdarstellung, welches sich in einer zweiten Schaltstellung befindet;
- Fig. 4: eine vereinfachte, schematische Darstellung eines Probengebers nach dem Stand der Technik mit einem Hochdruck-Injektionsventil nach den Fig. 1 bis 3, das als Schnitt im Bereich der Berührungsebene von Rotor und Stator dargestellt ist, mit daran angeschlossenen fluidischen Komponenten, wobei sich das Ventil in der LOAD-Position befindet;
- Fig. 5: eine Darstellung analog Fig. 4, jedoch mit in der INJECT-Position befindlichem Hochdruck-Injektionsventil;
- Fig. 6: ein Foto, welches Schäden in der Rotorstirnfläche eines Hochdruck-Injektionsventils nach den Fig. 1 bis 5 zeigt, welches längere Zeit bei Drücken über 600 bar betrieben wurde;
- Fig. 7: ein Foto, welches Schäden in der Rotorstimfläche eines Hochdruck-Injektionsventils nach den Fig. 1 bis 5 zeigt, welches längere Zeit bei Drücken über 600 bar betrieben wurde;
- Fig. 8: einen achsparalleler Schnitt durch die Nut und zwei Ports eines Ventils nach dem Stand der Technik, in dem auch die Fluidströmung dargestellt ist, welche die Schäden im Rotor verursacht;
- Fig. 9: eine schematische Darstellung der Nut und der zwei Ports der Darstellung in Fig. 8 in Draufsicht, in der ebenfalls die die Schäden im Rotor verursachende Strömung dargestellt ist;
- Fig. 10: eine Darstellung ähnlich Fig. 8, jedoch mit umgekehrter Strömungsrichtung des Fluids;
- Fig. 11: eine erste Ausführungsform eines erfindungsgemäßen Hochdruck-Injektionsventils in betriebsbereit zusammengebauten Zustand in schematischer, perspektivischer Ansicht;
- Fig. 12: eine vereinfachte, schematische Darstellung einer ersten Ausführungsform eines Probengebers nach der Erfindung mit einem Hochdruck-Injektionsventil nach Fig. 11, das als Schnitt im Bereich der Berührungsebene von Rotor und Stator dargestellt ist, mit daran angeschlossenen fluidischen Komponenten, wobei sich das Ventil in der LOAD-Position befindet;
- Fig. 13: den Probengeber in Fig. 12, wobei sich das Hochdruck-Injektionsventil in einer ersten kritischen Phase beim Umschalten von LOAD auf INJECT befindet,
- Fig. 14: den Probengeber in Fig. 12, wobei sich das Hochdruck-Injektionsventil in einer- zweiten kritischen Phase beim Umschalten von LOAD auf INJECT befindet,
- Fig. 15: den Probengeber in Fig. 12, wobei sich das Hochdruck-Injektionsventil in der INJECT-Position befindet;
- Fig. 16: den Probengeber in Fig. 12, wobei sich das Hochdruck-Injektionsventil in einer dritten kritischen Phase beim Umschalten von INJECT auf LOAD befindet;
- Fig. 17: den Probengeber in Fig. 12, wobei sich das Hochdruck-Injektionsventil in einer vierten kritischen Phase beim Umschalten von INJECT auf LOAD befindet,
- Fig. 18: den Probengeber in Fig. 12 beim Umschalten von LOAD auf INJECT, wobei sich das Hochdruck-Injektionsventil in einer Position befindet, in der die Probenschleife dekomprimiert wird;
- Fig. 19: eine Darstellung einer zweiten Ausführungsform eines erfindungsgemäßen Probengebers in der LOAD-Position, welcher ebenfalls das Hochdruck-Injektionsventil der Ausführungsform nach den Fig. 12 bis 18 umfasst, bei dem jedoch die daran angeschlossenen fluidischen Komponenten das "Pushed Loop" Injektionsprinzip realisieren;
- Fig. 20: eine Darstellung einer dritten Ausführungsform eines erfindungsgemäßen Probengebers, welcher eine zweite, in Bezug auf die Realisierung des "Pushed Loop" Injektionsprinzips verbessterte, erfindungsgemäße Ausführungsform eines Hochdruck-Injektionsventil umfasst, wobei sich das Hochdruck-Injektionsventil in einer Position befindet, kurz bevor eine Dekompression der Probenschleife erfolgt;
- Fig. 21: eine vereinfachte, schematische Darstellung einer vierten Ausführungsform eines Probengebers nach der Erfindung in der LOAD-Position mit einem Hochdruck-Injektionsventil nach Fig. 11, das als Schnitt im Bereich der Berührungsebene von Rotor und Stator dargestellt ist, wobei die fluidischen Komponenten zur Realisierung des "Split Loop" Injektionsprinzips angeschlossen sind;
- Fig. 22: zeigt eine zweite Ausführungsform eines erfindungsgemäßen Hochdruck-Injektionsventils in betriebsbereit zusammengebautem Zustand in schematischer, perspektivischer Explosionsdarstellung;
- Fig. 23: eine vereinfachte, schematische Darstellung einer weiteren Ausführungsform eines Probengebers nach der Erfindung mit einem Hochdruck-Injektionsventil nach Fig. 22, das als Schnitt im Bereich der Berührungsebene von Rotor und Stator dargestellt ist und das sich in einer kritischen Phase beim Umschalten von INJECT auf LOAD befindet, und
- Fig. 24: eine vereinfachte, schematische Darstellung einer weiteren Ausführungsform eines Probengebers nach der Erfindung mit einer weiteren erfindungsgemäßen Ausführungsform eines Hochdruck-Injektionsventils, das als Schnitt im Bereich der Berührungsebene von Rotor und Stator dargestellt ist und das sich in einer kritischen Phase beim Umschalten von INJECT auf LOAD befindet

Fig. 11 zeigt eine erste, bevorzugte Ausführungsform eines erfindungsgemäßen Hochdruck-Injektionsventils in einer ersten Schaltstellung. Der verbesserte Rotor 8 weist die Nuten 81, 83, 85 auf. Der Unterschied zum Ventil nach dem Stand der Technik (Fig. 2) besteht darin, dass die Nuten 83 und 85 im Vergleich zu den Nuten 23 und 25 verlängert wurden, so dass sie in der gezeichneten ersten Schaltstellung nicht schon bei den Ports 13 bzw. 15 enden, sondern darüber hinausragen. Ebenso wurde die Nut 81 in die andere Richtung verlängert, so dass sie über den Port 16 hinausragt. Der Stator 1 ist gegenüber dem Stand der Technik unverändert. Diese erste Ausführungsform ist in Fig. 12 in Draufsicht und mit angeschlossenen externen Komponenten gezeigt. Sowohl die Darstellung als auch die Beschaltung und Funktionsweise entsprechen exakt Fig. 4, d.h. das Ventil befindet sich in der LOAD-Position. Die Verlängerungen der Nuten 83, 85 stellen tote Enden dar, die in der LOAD-Position keinen nennenswerten Einfluss auf die Funktionsweise haben.

Nach dem Füllen der Probenschleife 50 wird das Ventil in die INJECT-Position gefahren. Die Schaltrichtung ist dabei im Unterschied zum Stand der Technik nicht beliebig, sondern der Rotor muss erfindungsgemäß beim Umschalten von Load nach Inject in Pfeilrichtung gedreht werden, so dass sich z.B. Nut 81 auf Port 15 zubewegt.

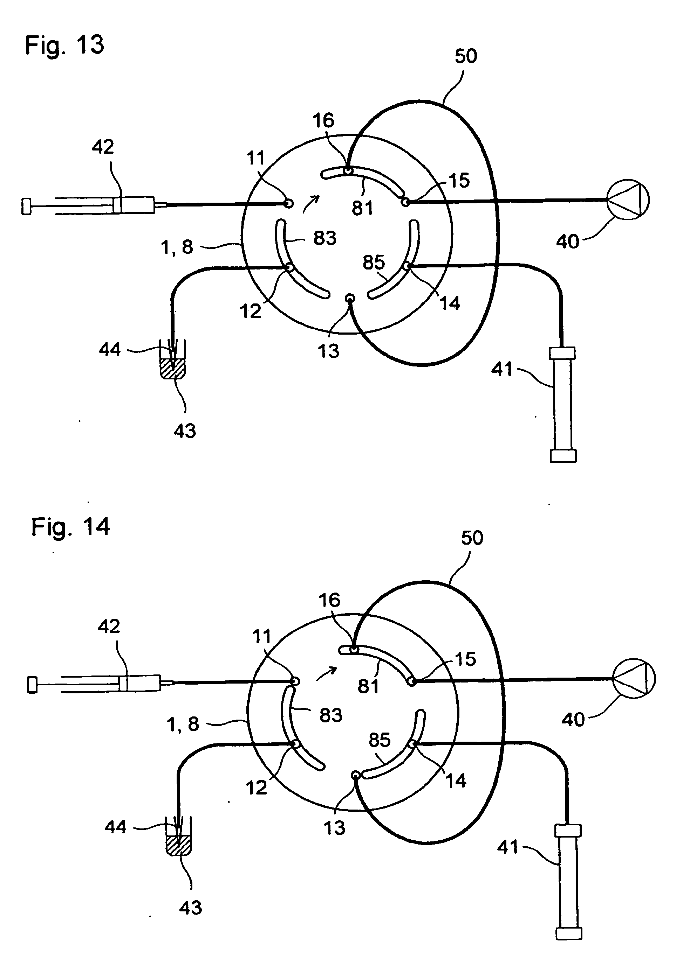

Fig. 13 zeigt das erfindungsgemäße Ventil in einer ersten kritischen Phase kurz vor Erreichen der INJECT-Position. Port 11 und 12 sind beide drucklos, so dass hier keine Probleme zu erwarten sind.

Die Nut 81 erreicht gerade den Port 15, an dem der durch die Pumpe aufgebaute Druck anliegt. Dabei strömt das Lösungsmittel von Port 15 in Richtung der Nut 81. Damit sind die Strömungsverhältnisse analog zu Fig. 10, es tritt also kein Schaden an Rotor 8 oder Stator 1 auf. Der Pumpendruck kann nun über die Nut 81 die Probenschleife 50 unter Druck setzen. Währenddessen dreht sich der Rotor weiter in Pfeilrichtung.

Fig. 14 zeigt das erfindungsgemäße Ventil in einer zweiten kritischen Phase unmittelbar vor Erreichen der INJECT-Position. Der Rotor hat sich im Vergleich zu Fig. 13 um so viel weiter gedreht, dass nun die Nut 85 gerade den Port 13 erreicht. Zu diesem Zeitpunkt überdeckt die Nut 81 den Port 15 bereits völlig, so dass die Probenschleife 50 unter dem vollen Druck der Pumpe 40 steht. Da die Pumpe 40 während des Umschaltvorgangs Druck aufbaut, während die Säule 41 Druck abbaut, ist auch hier die Strömungsrichtung analog zu Fig. 10, d.h. von der Probenschleife 50 über Port 13 in die Nut 85. Somit findet auch hier keine Materialschädigung statt.

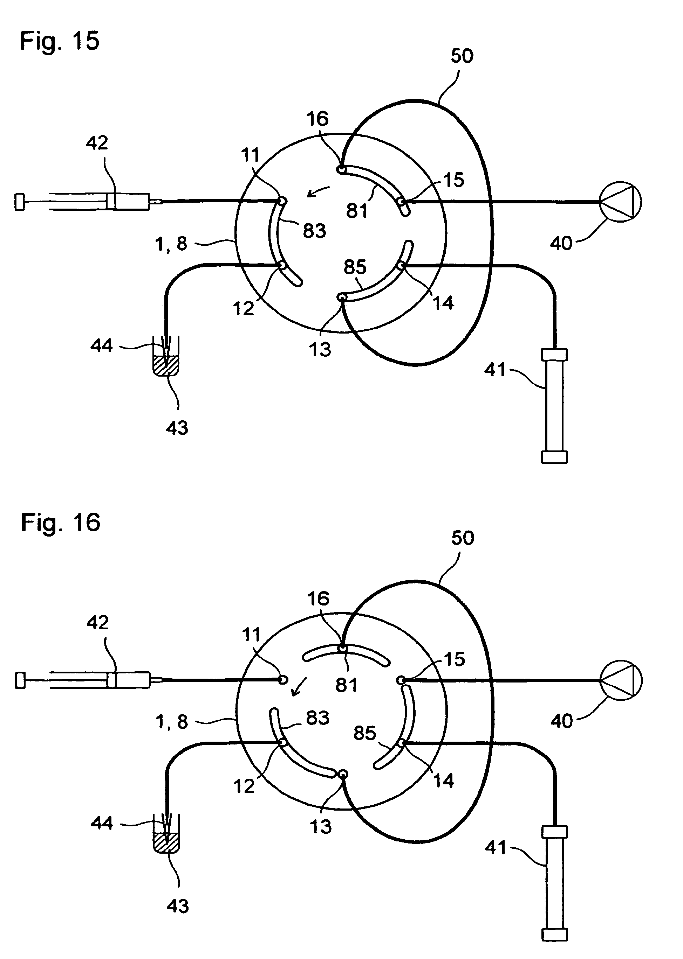

Fig. 15 zeigt das erfindungsgemäße Ventil nach Erreichen der INJECT-Position. Die Strömungen verlaufen ebenso wie bei einem Ventil nach dem Stand der Technik, das in der Probenschleife 50 befindliche Probenmaterial wird mit dem Flüssigkeitsstrom der Pumpe 40 zur Säule 41 transportiert.

Nun müssen noch die Vorgänge beim Zurückschalten des erfindungsgemäßen Ventils in die LOAD-Position betrachtet werden. Dies erfolgt in umgekehrter Richtung, was in Fig. 15 durch einen Pfeil angedeutet ist. Dabei sind wiederum nur diejenigen Schaltvorgänge kritisch, bei denen große Druckunterschiede auftreten.

Fig. 16 zeigt die dritte kritische Phase, die während des Zurückschaltens von INJECT nach LOAD auftritt. Die Nut 83, die mit der drucklosen Probennadel 44 verbunden ist, erreicht den Port 13, welcher unter dem Druck der Probenschleife 50 steht. Auch in diesem Fall erfolgt der Druckabbau analog zu Fig. 10 vom Port 13 in die Nut 83, so dass keine Materialschädigung eintritt. Ebenso kann sich der Druck der Pumpe 40 von Port 15 in Richtung Nut 85 abbauen, ohne dass eine Schädigung eintritt.

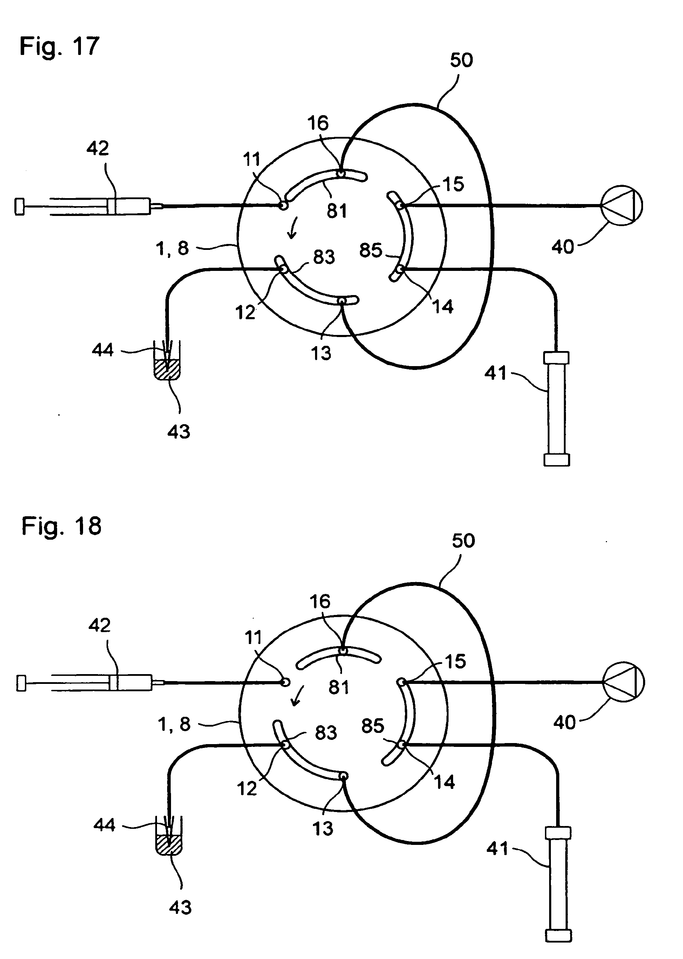

Fig. 17 zeigt die Stellung des Rotors kurz vor Erreichen der LOAD-Position. Zu diesem Zeitpunkt wird Port 13 bereits voll von der Nut 83 überdeckt, so dass sich der Druck in der Probenschleife 50 schnell abbauen kann. Daher ist zwischen Port 11 und Nut 81 kein Druckunterschied mehr wirksam, so dass sich keine schädliche Strömung ausbilden kann. Dies hat gleichzeitig den Vorteil, dass an der Spritze 42 im Vergleich zum Stand der Technik kein Druckstoß auftritt.

Das Erreichen der LOAD-Position entspricht wieder Fig. 12. Diese Betrachtung zeigt, dass mit dem erfindungsgemäßen Ventil und bei Einhaltung der erfindungsgemäß festgelegten Schaltrichtung sämtliche Schaltvorgänge, bei denen hohe Druckdifferenzen wirksam sind, so ablaufen, dass sich der Druck vom jeweiligen Port in Richtung der Nut abbaut. Hierdurch werden die in Fig. 6 und Fig. 7 gezeigten Schäden an Rotor und Stator vermieden. Somit löst die Erfindung in der bisher beschriebenen ersten Ausführungsform die gegebene Aufgabenstellung im Prinzip bereits vollständig.

Die Arbeitsweise der Erfindung basiert unter anderem auf einer zweckmäßigen zeitlichen Abfolge der einzelnen Teilschritte der Schaltvorgänge. Durch die beschriebene Verlängerung der Nuten wird der zeitliche Ablauf der Umschaltvorgänge so festgelegt, dass die schädigenden Situationen vermieden werden. Voraussetzung für die Funktionsweise ist somit, dass in der zwischen den einzelnen Teilschritten liegenden Zeit auch tatsächlich ein ausreichender Druckausgleich stattfinden kann. Daher müssen auch dynamische Aspekte berücksichtigt werden. Beim Umschalten von der Inject- in die LOAD-Position beginnt der Druckabbau in der Probenschleife 50, sobald die in Fig. 16 gezeigten Schaltstellung des Ventils erreicht ist. Wie schnell sich der Druck abbaut, hängt von den Volumina und Flusswiderständen von Probenschleife 50, Nut 83, der Ports 12, 13, der Probennadel 44 und ihrer Verbindungskapillare ab. Außerdem gehen die Massenträgheit und Kompressibilität der in diesen Bauteilen befindlichen Flüssigkeit ein. Zudem können wegen der hohen Strömungsgeschwindigkeiten turbulente Strömungen auftreten. Aus diesen Gründen ist der Druckabbau ein komplexer dynamischer Vorgang, der unter Umständen länger dauert als erwartet, insbesondere bei Verwendung einer Probenschleife 50 mit großem Innenvolumen.

Die für den Druckabbau zur Verfügung stehende Zeit sollte deshalb so lang wie möglich sein. Hierzu könnte die Nut 83 so lang wie möglich gemacht werden, so dass sie in Fig. 16 den Port 13 früher erreicht.

Mit zunehmender Länge der Nuten 81, 83, 85 verringert sich jedoch der Abstand bzw. die Breite des verbleibenden Steges zwischen den Nutenden, der für die Dichtwirkung des Ventils benötigt wird. Daher dürfen die Nuten auch nicht zu stark verlängert werden. Ein zweckmäßiger Kompromiss ist eine Verlängerung der Nuten um etwa 5 bis 35 % im Vergleich zur ursprünglichen Länge der Nuten 21, 23, 25. Da für die Funktionsweise der Erfindung nur die Reihenfolge der Schaltvorgänge entscheidend ist, spielt es nur eine untergeordnete Rolle, um welchen genauen Prozentsatz die Nuten verlängert werden.

Neben der Länge der Nuten 81, 83, 85 hängt die Zeit, die für den Druckausgleich zur Verfügung steht, auch von der Drehgeschwindigkeit des Rotors 8 während des Umschaltvorgangs .ab. Da während des Umschaltvorgangs die Flusswege zeitweise unterbrochen werden, ist der Antrieb derartiger Ventile nach dem Stand der Technik so ausgelegt, dass der Umschaltvorgang möglichst schnell abläuft. Bei derzeit kommerziell erhältlichen Ventilen liegt die Gesamtdauer eines Umschaltvorgangs im Zehntelsekundenbereich, z.B. 0,2 s. Damit stehen bei einer Verlängerung der Nuten um beispielsweise 20 % einige zehn Millisekunden für den Druckausgleich zur Verfügung. In dieser Zeit können sich Druckdifferenzen in der Regel so weit abbauen, dass keine Beschädigungen am Ventil mehr auftreten können.

Wie bereits erwähnt, kann es beim Umschalten von INJECT nach LOAD zu einem Druckstoß auf die Spritze 42 kommen, wenn sich der Druck in der Probenschleife 50 nicht schnell genug abbaut. Um dies zu vermeiden, soll ein möglichst vollständiger Druckausgleich erreicht werden. Zudem kann ein plötzlicher Druckabbau durch dynamische Prozesse die Bildung von Gas- oder Vakuumblasen zur Folge haben, was zu einer starken Verlangsamung des Druckausgleichs führt. Aus diesen Gründen ist es wünschenswert, für den Druckabbau möglichst viel Zeit zur Verfügung stellen zu können.

Dies kann in einer zweckmäßigen Weiterentwicklung der Erfindung dadurch sichergestellt werden, dass während des Zurückschaltens in die LOAD-Position der Antrieb des Ventils entweder stark abgebremst oder zeitweise ganz angehalten wird, sobald die Probenschleife 50 mit der Probennadel 44 sowie die Pumpe 40 mit der Säule 41 verbunden sind.

Fig. 18 zeigt eine mögliche Position, in der der Ventilantrieb angehalten oder abgebremst werden kann. Diese Position wird unmittelbar im Anschluss an Fig. 16 erreicht. Die Pumpe 40 ist über die Nut 85 bereits mit der Säule 41 verbunden, und die Probenschleife 50 kann ihren Druck über die Nut 83 in Richtung Probennadel 44 abbauen. Da der nächste Load-Vorgang erst sehr viel später, nämlich nach Abschluss des chromatographischen Trennprozesses ausgeführt werden muss, steht nun genügend Zeit für den Druckabbau in der Probenschleife 50 zur Verfügung. Hierzu kann der Ventilantrieb nach Erreichen der in Fig. 18 dargestellten Position, jedoch vor Erreichen der in Fig. 17 dargestellten Position für eine vorgegebene Zeit angehalten werden. Das Weiterfahren nach Load Fig. 12 muss erst dann erfolgen, wenn die Probenschleife 50 wieder mit neuem Probenmaterial befüllt werden soll.

Statt den Ventilantrieb ganz anzuhalten, kann ab Erreichen der in Fig. 18 dargestellten Position auch die Geschwindigkeit des Antriebs deutlich reduziert werden, so dass der Rotor 8 nur langsam in die LOAD-Position weiterläuft.

In beiden Fällen wird erreicht, dass der Druck in der Probenschleife abgebaut ist, bevor die LOAD-Position erreicht wird. Druckstöße auf die Spritze 42 können durch dieses erfindungsgemäße Abbremsen vollständig vermieden werden.

In den bisherigen Erläuterungen erfolgt die Injektion dadurch, dass die in den Hochdruckkreis einzubringende Probe zunächst durch die Spritze 42 in eine feste Probenschleife 50 gesaugt wird. Dieses Injektionsprinzip bezeichnet man als "Pulled Loop" oder "Fixed Loop". Weitere verbreitete Injektionsprinzipien sind das "Pushed Loop" und das "Split Loop" Prinzip. Auf diese Prinzipien kann die Erfindung sinngemäß in gleicher Weise wie folgt angewendet werden:

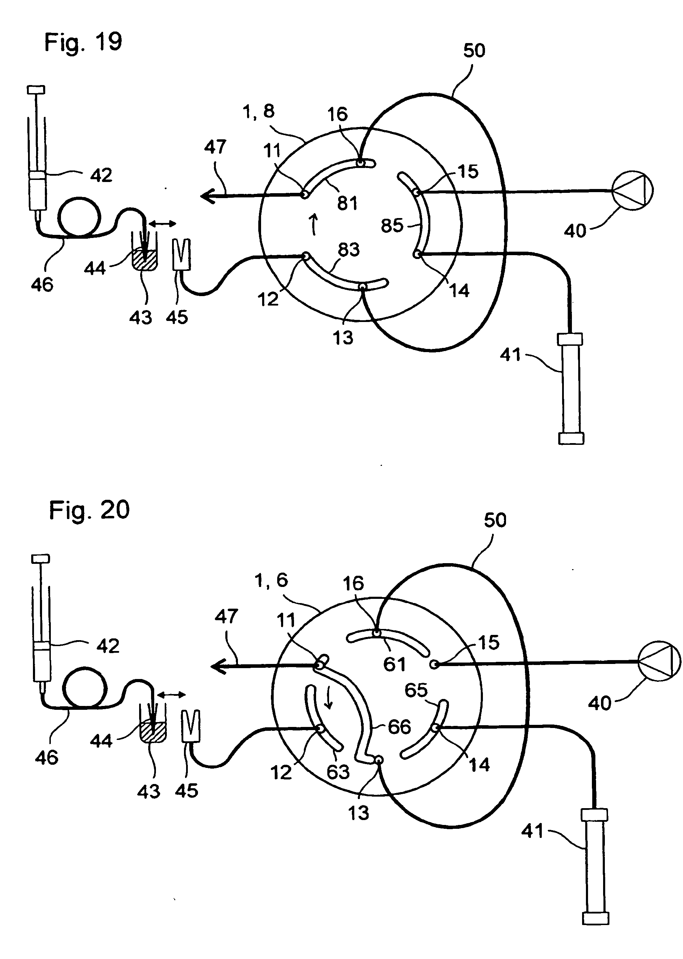

Fig. 19 zeigt die Anwendung der Erfindung auf das bekannte "Pushed Loop"-Prinzip. Dargestellt ist die LOAD-Position. Die Spritze 42 ist hier über eine Pufferkapillare 46 direkt mit der Probennadel 44 verbunden. Die Probenflüssigkeit 43 kann nun in die Pufferkapillare 46 gesaugt werden. Anschließend kann die Probennadel 44 in einen Nadelsitz 45 bewegt werden, welcher mit Port 12 verbunden ist. Dies ist in Fig. 19 durch einen Pfeil angedeutet. Nun kann mit der Spritze 42 Probenflüssigkeit in die Probenschleife 50 gedrückt werden. An Port 11 ist eine Waste-Kapillare 47 angeschlossen, über die verdrängte Flüssigkeit entsorgt wird.

Das "Pushed Loop"-Prinzip unterscheidet sich vom bisher beschriebenen "Pulled Loop"-Prinzip durch die Art der niederdruckseitigen Befüllung der Probenschleife 50. Daher gelten bzgl. der Erfindung sämtliche Betrachtungen in gleicher Weise wie oben beschrieben. Allerdings erfolgt die Dekompression der Probenschleife 50 nun über den Nadelsitz 45, welcher an Port 12 angeschlossen ist. Dies ist unerwünscht, weil dabei Probenflüssigkeit am Nadelsitz austreten kann, welche beim nächsten Befüllen der Probenschleife zu einer Verunreinigung der nächsten Probe führt.

Fig. 20 zeigt eine verbesserte Ausführungsform eines Hochdruck-Injektionsventils für das "Pushed Loop"-Prinzip. Die Anordnung entspricht weitgehend Fig. 19, es ist jedoch im modifizierten Rotor 6 außer den Nuten 61, 63, 65 (die den Nuten 81, 83, 85 entsprechen) eine zusätzliche Nut 66 vorgesehen, welche eine Dekompression der Probenschleife 50 ermöglicht, ohne dass am Nadelsitz 45 Flüssigkeit auftritt. In Fig. 20 ist der kritische Zeitpunkt dargestellt, zu dem beim Umschalten von der Inject- in die LOAD-Position die Dekompression der Probenschleife beginnt. Die Nut 66 ist bereits über Port 11 mit der Waste-Kapillare 47 verbunden und erreicht gerade den Port 13. Der Druck in der Probenschleife kann sich dann über die Nut 66 abbauen, wobei die Strömungsrichtung wiederum der in Fig. 10 dargestellten, nicht schädlichen Situation entspricht. Somit wird durch die erfindungsgemäße Nut 66 erreicht, dass sich der Druck in der Probenschleife 50 abbauen kann, ohne dass es zu Beschädigungen an Rotor oder Stator und ohne dass bei der Dekompression der Probenschleife am Nadelsitz 45 Flüssigkeit austritt.

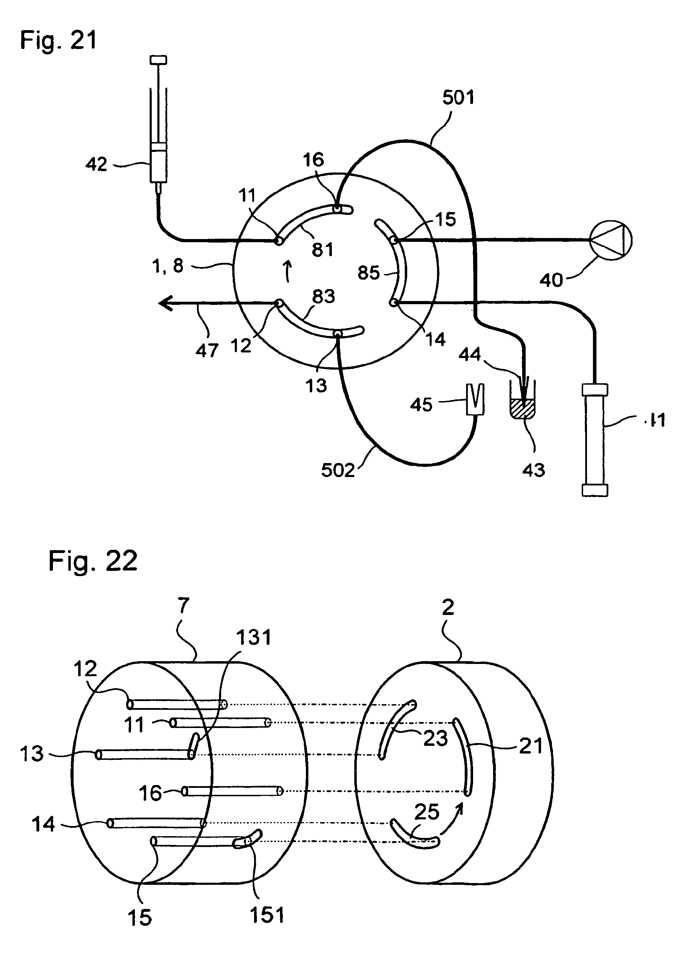

Fig. 21 zeigt die Anwendung der Erfindung auf das bekannte "Split Loop"-Prinzip. Hier besteht die Probenschleife aus zwei Teilen 501, 502. Der obere Teil 501 ist an die Probennadel 44 angeschlossen, der untere Teil 502 an einen Nadelsitz 45. Zur Probenentnahme befindet sich die Probennadel im Probenbehälter 43. Über die an Port 11 angeschlossene Spritze 42 kann nun Probenflüssigkeit in den oberen Teil 501 der Probenschleife gesaugt werden. Anschließend wird die Probennadel in den Nadelsitz 45 bewegt, so dass die Probenschleife 501, 502 damit hochdruckdicht geschlossen ist. Auch beim "Split Loop"-Prinzip beschränken sich die Unterschiede auf die Art der niederdruckseitigen Befüllung der Probenschleife. Nach dem Schließen der Probenschleife ergeben sich wiederum exakt die gleichen Druck- und Strömungsverhältnisse wie oben beschrieben. Daher besteht bzgl. der Wirkungsweise der Erfindung auch hier kein Unterschied zu den obigen Ausführungen.

Wie bereits erläutert, ist für die Realisierung der Erfindung eine Festlegung der Schaltrichtung des Ventils in Bezug auf die Anschlussreihenfolge der Komponenten erforderlich. Dabei ist entscheidend, dass sich bei der Umschaltung von Load nach Inject der Rotor vom Pumpenanschluss Port 15 in Richtung auf den Säulenanschluss Port 14 bewegt, beim Zurückschalten in umgekehrte Richtung.

Die tatsächlich erforderliche Drehrichtung hängt demnach von der Anschlussreihenfolge von Pumpe und Säule ab. Zur Vereinfachung der Beschreibung wurde eine willkürlich festgelegte Anschlussreihenfolge und die zugehörige Drehrichtung verwendet. Wird bei der praktischen Umsetzung der Erfindung die Anschlussreihenfolge umgekehrt gewählt, müssen auch die Drehrichtungen entsprechend angepasst werden.

Die Erfindung lässt sich auch dann in gleicher Weise verwenden, wenn für die Injektion ein Ventil mit mehr als 6 Ports verwendet wird. So ist beispielsweise in der WO2007062642 ein Probengeber beschrieben, der gleichzeitig eine Probenfraktionierung ausführen kann und mit einem 8-Port Injektionsventil arbeitet. Die beiden zusätzlichen Ports werden hier dafür verwendet, am Ausgang einer Chromatographiesäule austretende und bereits getrennte Probenbestandteile auf verschiedene Probenbehälter zu verteilen. Diese beiden Ports befinden sich zwischen den Anschlüssen für die Spritze und die Probennadel und werden ausschließlich mit Niederdruck betrieben, so dass hier keine nennenswerten Druckdifferenzen auftreten können. Daher sind hier keine Maßnahmen zur Vermeidung von Schäden erforderlich. Bzgl. der übrigen Ports und der zugehörigen Nuten kann die Erfindung in gleicher Weise wie beschrieben angewendet werden.

Bei dem erfindungsgemäßen Injektionsventil sind im Vergleich zum Stand der Technik alle drei Nuten 81, 83, 85 verlängert. Dabei dient die Verlängerung der Nut 81 nur dazu, eine Schädigung der Nut 85 durch die in der Säule 41 gespeicherte hydraulische Energie zu vermeiden. Da die Säule und ihre Zuleitung aus chromatographischen Gründen sehr totvolumenarm ausgeführt sind, ist diese Energie in der Regel so gering, dass auch ohne Verlängerung der Nut 81 keine nennenswerten Materialschäden entstehen.

Daher kann in einer zweckmäßigen Ausgestaltung der ersten Ausführungsform auf eine Verlängerung der Nut 81 verzichtet werden, d.h. gegenüber dem Stand der Technik werden lediglich die Nuten 83 und 85 verlängert, während die Nut 81 die gleiche Länge haben kann wie Nut 21. Dies hat den Vorteil, dass der Abstand zwischen den Enden von Nut 85 und Nut 81 nicht noch weiter verringert wird, als dies durch die im Vergleich zum Stand der Technik verlängerte Nut 85 bereits der Fall ist. Dadurch kann vermieden werden, dass ein zu geringer Abstand zwischen den Nutenden zu Dichtigkeitsproblemen führt.

Entscheidend für die Funktionsweise der Erfindung ist, dass die Schaltvorgänge in der richtigen zeitlichen Reihenfolge erfolgen. Dies wird unter anderem durch die beschriebene Verlängerung der Nuten im Rotor erreicht. Da die Bearbeitung des Rotors relativ einfach (sogar nachträglich) erfolgen kann, ist dies die bevorzugte Ausführungsform der Erfindung.

Die erforderliche Festlegung der Schaltreihenfolge kann in einer weiteren Ausführungsform auch durch Modifikation des Stators bei unverändertem Rotor erreicht werden.

Fig. 22 zeigt in gleicher Darstellung wie Fig. 1 ein Injektionsventil nach der zweiten Ausführungsform der Erfindung mit in den modifizierten Stator 7 eingearbeiteten Nuten 131, 151. Der Rotor 2 ist gegenüber Fig. 1 unverändert mit den Nuten 21, 23, 25. Die Nut 131 geht von Port 13 aus in Richtung Port 12 und bewirkt, dass die Nut 23 etwas vorzeitig mit dem Port 13 verbunden wird, wenn das Ventil von der Inject- in die LOAD-Position geschaltet wird. Damit ist die Wirkung exakt die gleiche wie in Fig. 16 dargestellt. Die Nut 151 geht von Port 15 in beide Richtungen. Dadurch wird beim Schalten von Inject nach Load die Nut 25 etwas vorzeitig mit Port 15 verbunden, umgekehrt wird beim Schalten von Load nach Inject die Nut 21 vorzeitig mit Port 15 verbunden.

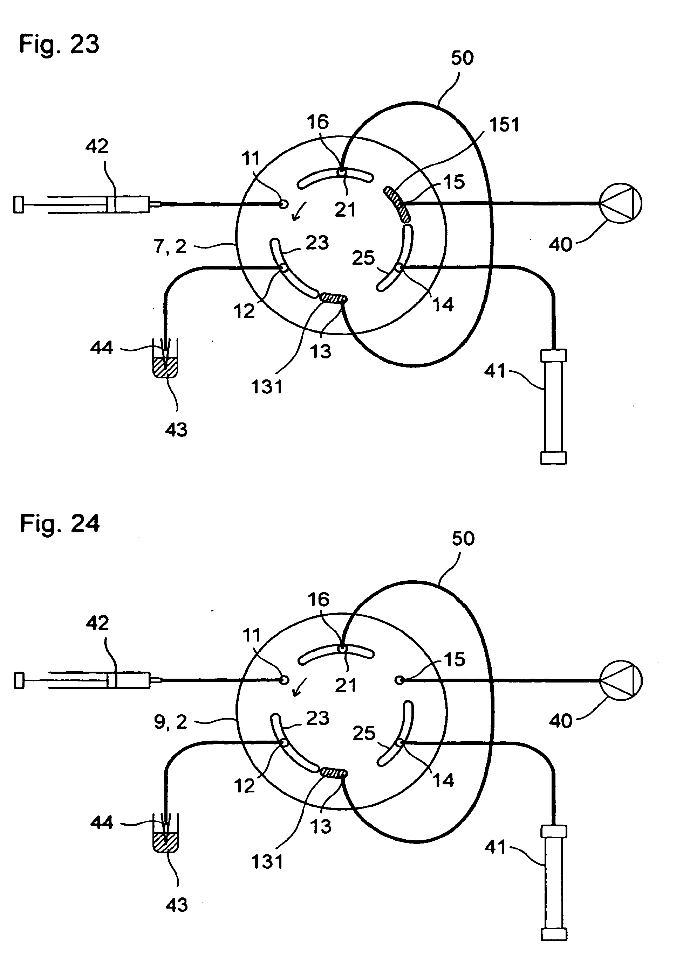

Fig. 23 zeigt die zweite Ausführungsform der Erfindung in der gleichen Darstellung und der gleichen Schaltposition wie Fig. 16. Die Nuten 131, 151 im Stator sind zur besseren Unterscheidung schraffiert dargestellt. Man erkennt, dass ebenso wie in Fig. 16 die Nut 23 etwas vorzeitig mit der Statomut 131 und somit mit Port 13 und die Nut 25 mit der Statornut 151 und somit mit Port 15 verbunden wird. Beim Zurückschalten wird die Nut 21 vorzeitig mit dem anderen Ende der Statomut 151 und somit mit Port 15 verbunden. Da auch hier die Strömung in die Nuten des Rotors fließt, findet keine Schädigung statt.

Somit ist die Wirkung der Nuten 131, 151 im Stator 7 identisch mit der bereits beschriebenen Wirkung der verlängerten Nuten 81, 83, 85 im Rotor 8. Auch diese Ausführungsform der Erfindung verhindert die beim Stand der Technik zu beobachtenden Beschädigungen vollständig.

Wie in Fig. 6 zu sehen, entsteht bei Ventilen nach dem Stand der Technik der gravierendste Schaden 201 am Ende der Nut 23. Daher kann eine wesentliche Verbesserung der Lebensdauer des Ventils bereits erreicht werden, wenn lediglich an dieser Stelle die Schadensentstehung vermieden wird. Dies kann entsprechend der ersten Ausführungsform der. Erfindung dadurch erreicht werden, dass die Beschaltung des Ventils wie in Fig. 12 vorgenommen wird und dass nur eine einzige verlängerte Nut 83 verwendet wird, während die Nuten 81 und 85 die gleiche Länge aufweisen wie die Nuten 21 und 23 bei Ventilen nach dem Stand der Technik.

Entsprechend der zuvor beschriebenen Ausführungsform kann der Schaden 201 bereits dadurch vermieden werden, dass in Fig. 23 die Nut 151 im Stator weggelassen wird.

Hieraus ergibt sich eine weitere Ausführungsform, die in Fig. 24 dargestellt ist. Hier enthält der Stator 9 nur noch eine einzige Nut 131, die von Port 13 ausgehend in Richtung Port 12 verläuft. In Fig. 24 ist wieder die kritische Situation beim Umschalten von Inject nach Load dargestellt, wenn die unter Druck stehende Probenschleife 50 gerade mit der Probennadel 44 verbunden wird. Der Druckabbau erfolgt von der Statornut 131 in Richtung auf die Rotomut 23, so dass keine Schädigung eintritt.

Diese Ausführungsform hat den besonderen Vorteil, dass sie durch geschickte Beschaltung eines fertig erhältlichen Ventils mit "Make-Before-Break"-Funktionalität realisiert werden kann, da nur eine einzige Nut im Stator benötigt wird. Der mit einer Statomut versehene Port wird jedoch nicht, wie eigentlich vorgesehen, an die Pumpe oder die Säule angeschlossen, sondern mit der Probennadel verbunden, so dass sich der in Fig. 24 dargestellte Aufbau ergibt. Durch diese Beschaltung wird an Stelle der eigentlich vorgesehenen "Make-Before-Break"-Funktionalität die erfindungsgemäße Verbesserung der Lebensdauer erreicht.

Selbstverständlich kann auch diese Ausführungsform in gleicher Weise wie die zuvor beschriebenen Ausführungsformen auch auf andere Injektionsprinzipien angewendet werden.

Abschließend sei darauf hingewiesen, dass die einzelnen Ausführungsformen und Weiterbildungen der Erfindung sowohl einzeln als auch kombiniert eingesetzt werden können.

## Patentansprüche

1. Probengeber für die Hochleistungsflüssigkeitschromatographie
(a) mit einem Hochdruck-Injektionsventil, welches zumindest zwei Load-Ports (11, 12) für das Zuführen oder Abführen von unter niedrigem Druck stehendem Fluid, zwei Probenschleifen-Ports (13, 16), sowie zwei Hochdruck-Ports (14, 15) für das Zuführen und Abführen von unter hohem Druck stehendem Fluid aufweist,
(i) wobei die Ports (11 bis 16) durch Kanäle in einem Stator (1) des Hochdruck-Injektionsventils gebildet sind, die an einem Ende über jeweils einen druckdichten Anschluss mit einer Fluidleitung verbunden oder verbindbar sind und die am anderen Ende an einer Stirnfläche (10) des Stators (1) einen vorbestimmten Port-Öffnungsquerschnitt aufweisen,
(ii) wobei ein Rotor (2) des Hochdruck-Injektionsventils eine mit der Stirnfläche (10) des Stators (1) zusammenwirkende Stirnfläche (20) aufweist, in welcher zumindest drei verlaufende Nuten (81, 83, 85; 61, 63, 65; 21, 23, 25) ausgebildet sind, die abhängig von der Drehposition des Rotors (2) gegenüber dem Stator (1) vorbestimmte Port-Öffnungsquerschnitte druckdicht verbinden, wobei der Rotor (2) mit einer so hohen Andruckkraft gegen den Stator (1) gepresst ist, dass die Nuten (81, 83, 85; 61, 63, 65; 21, 23, 25) in der Stirnfläche (20) des Rotors für Drücke größer als 600 bar abgedichtet sind,
(iii) wobei die zumindest drei Nuten (81, 83, 85; 61, 63, 65; 21, 23, 25) zumindest in solchen Winkelbereichen in Umfangsrichtung und konzentrisch zur Drehachse verlaufen, in welchen zwischen den Nuten (81, 83, 85; 61, 63, 65; 21, 23, 25) und entsprechenden Ports eine Fluidströmung ermöglicht ist,
(b) mit einer Probenschleife (50, 501/502) die an einem Ende mit einem der Probenschleifen-Ports (13, 16) und am anderen Ende mit dem anderen der Probenschleifen-Ports (13, 16) verbunden ist, und
(c) mit einer Hochdruckpumpe (40), welche mit einem der Hochdruckports ( 15) verbunden ist,
(d) wobei die zumindest drei Nuten (81, 83, 85; 61, 63, 65; 21, 23, 25) des Rotors (2) und die Port-Öffnungsquerschnitte so ausgebildet und angeordnet sind,
(i) dass in einer LOAD-Position des Rotors (2) die beiden Hochdruckports (14, 15) miteinander sowie einer der Probenschleifen-Ports (13, 16) mit einem der Load-Ports (11, 12) und der jeweils andere der Probenschleifen-Ports (13, 16) mit dem jeweils anderen Load-Port (11, 12) verbunden sind,
(ii) dass in einer INJECT-Position des Rotors (2) die beiden Load-Ports (11, 12) miteinander sowie einer der Hochdruck-Ports (14, 15) mit einem der Probenschleifen-Ports (13, 16) und der jeweils andere der Hochdruck-Ports (14, 15) mit dem jeweils anderen der Probenschleifen-Ports (13, 16) verbunden sind, und
(iii) dass sowohl in der LOAD- Position als auch in der INJECT-Position eine erste (83, 63, 23) der Nuten mit einem Load-Port verbunden ist (Load-Port-Nut), eine zweite (81,61,21) der Nuten mit einem Probenschleifen-Port (Probenschleifen-Port-Nut) und eine Dritte (85, 65, 25) der Nuten mit einem Hochdruck-Port (Hochdrück-Port-Nut) verbunden ist,
**dadurch gekennzeichnet,**
(e) **dass** die zumindest drei Nuten (81, 83, 85, 61, 63, 65, 66; 21, 23, 25) und/oder die Port-Öffnungsquerschnitte so vorgesehen und ausgebildet sind und die Drehrichtung so gewählt ist, dass bei einem Drehen des Rotors (2) aus der INJECT-Position in die LOAD-Position die unter Hochdruck stehende Probenschleife (50, 501/502) in der Weise dekomprimiert wird,
(i) **dass** die Nuten (81, 83, 85; 61, 63, 65, 66; 21, 23, 25) und/oder die Port-Öffnungsquerschnitte so ausgebildet und angeordnet sind, dass zuerst die Verbindung zwischen demjenigen Probenschleifen-Port (13) und demjenigen Load-Port (12) hergestellt und aufrechterhalten wird, die durch die Bewegung der Load-Port-Nut (83, 63, 23) in Richtung auf den betreffenden Prohenschleifen-Port (13) entsteht, bevor die Verbindung zwischen dem anderen Probenschleifen-Port (16) und dem anderen Load-Port (11) hergestellt und aufrechterhalten wird, die durch die Bewegung der ProbenschleifenPort-Nut (81, 61, 21) in Richtung auf den betreffenden Load-Port (11) entsteht (Funktion des Vorauseilens zur Dekomprimierung der Pro-benschleife),
oder
(ii) dass eine weitere Entspannungsnut (66) im Rotor (2) vorgesehen ist, die so ausgebildet ist, dass vordem Erreichen der LOAD-Position in einer bestimmten Drehposition, oder über einen bestimmten Winkelbereich hinweg eine Verbindung zwischen demjenigen Probenschleifen-Port (13) und demjenigen Load-Port (11) hergestellt und aufrechterhalten wird, welcher nicht dauernd mit einer Nut verbunden sind, wobei das Ende der Entspannungsnut (66), welches mit dem Probenschleifen-Port (13) verbunden wird, und/oder der Port-Öffnungsquerschnitt, über einen ausreichend langen Entspannungsbereich konzentrisch und in Umfangsrichtung verlaufen, der so bemessen ist, dass die Strömungsgeschwindigkeiten der Fluidströmung, die beim Erreichen der Überdeckung von Entspannungsnut (66) und Port-Öffnungsquerschnitt entsteht, im Entspannungsbereich so weit reduziert werden, dass eine Beschädigung des Stators (1) und/oder des Rotors (2) vermieden wird,
und
(f) **dass** die Drehrichtung so gewählt ist und die Nuten (81, 83, 85; 61, 63, 65, 66; 21, 23, 25) und/oder die Port-Öffnungsquerschnitte so ausgebildet und angeordnet sind, dass bei einem Drehen des Rotors (2) aus der LOAD-Position in die INJECT-Position die im Wesentlichen drucklose Probenschleife (50, 501/502) in der Weise mit Hochdruck beaufschlagt wird,
(i) **dass** zuerst die Verbindung zwischen demjenigen Probenschleifen-Port (16), welcher während der Umschaltbewegung dauernd mit einer Nut (81, 61, 21) verbunden ist, und dem betreffenden Hochdruck-Port (15) hergestellt und aufrechterhalten wird, wobei hierzu die Probenschleifen-Port-Nut (81, 61, 21) in Richtung auf den betreffenden Hochdruck-Port (15) bewegt wird, und
(ii) **dass** erst anschließen die Verbindung zwischen dem andem Hochdruck-Port (14) und dem anderen Probenschleifen-Port (13) hergestellt und aufrechterhalten wird, wobei hierzu die Hochdruckport-Nut (85, 65, 25) in Richtung auf den betreffenden Probenschleifen-Port bewegt wird (Funktion des Vorauseilens zur Druckbeaufschlagung der Probenschleife).

2. Probengeber nach Anspruch 1, **dadurch gekennzeichnet, dass** die Load-Port-Nut (83, 63, 23), die Probenschleifen-Port-Nut (81,61,21) und die Hochdruck-Port-Nut (85, 65, 25) jeweils in Umfangsrichtung und konzentrisch verlaufend ausgebildet sind und bei einem Übergang von der LOAD- in die INJECT-Position und umgekehrt dauernd mit dem betreffenden Port verbunden sind.

3. Probengeber nach Anspruch 1 oder 2, **dadurch gekennzeichnet, dass** die Port-Öffnungsquerschnitte in äquidistanten Winkelabständen entlang der durch die Nuten (81, 83, 85; 61, 63, 65; 21,23,25) definierten Kreisbahn vorgesehen sind.

4. Probengeber nach einem der vorhergehenden Ansprüche, **dadurch gekennzeichnet, dass** die Load-Port-Nut (83) in Bezug auf das Umschalten von der INJECT-Position auf die LOAD-Position gegenüber der Probenschleifen-Port-Nut (81,61,21) vorauseilend ausgebildet ist.

5. Probengeber nach einem der Ansprüche 1 bis 3, **dadurch gekennzeichnet, dass** sich der Port-Öffnungsquerschnitt des Load-Ports (13), welcher nicht dauernd mit einer Nut verbunden ist, hutförmig in Richtung auf die Load-Port-Nut (83, 63, 23) erstreckt, wobei die Länge der nutförmigen Erstreckung (131) des Port-Öffnungsquerschnitts so gewählt ist, dass beim Umschalten von der INJECT-Position auf die LOAD-Position die Funktion des Vorauseilen zur Dekomprimierung der Probenschleife (50, 501/502) realisiert ist.

6. Probengeber nach einem der vorhergehenden Ansprüche, **dadurch gekennzeichnet, dass** die Hochdruck-Port-Nut (85, 65, 25) so lang ausgebildet ist, dass die beiden Hochdruck-Ports (14, 15) in derjenigen Drehposition, in welcher die Dekompression der Probenschleife stattfindet, oder über den gesamten Winkelbereich der Drehbewegung, in welchem die Dekompression der Probenschleife (50,501/502) stattfindet, verbunden sind.

7. Probengeber nach einem der Ansprüche 1 bis 5, **dadurch gekennzeichnet, dass** sich der Port-Öffnungsquerschnitt des Hochdruck-Ports (15), welcher während des Umschaltvorgangs nicht dauernd mit einer Nut verbunden ist, nutförmig in Richtung auf die Hochdruck-Port-Nut (25) erstreckt, wobei die Länge der nutförmigen Erstreckung des Port-Öffnungsquerschnitts so gewählt ist, dass die beiden Hochdruck-Ports (14, 15) beim Umschalten von der INJECT-Position auf die LOAD-Position in derjenigen Drehposition, in welcher die Dekompression der Probenschleife (50, 501/502) stattfindet, oder über den gesamten Winkelbereich der Drehbewegung, in welchem die Dekompression der Probenschleife (50, 501/502) stattfindet, verbunden sind.

8. Probengeber nach einem der vorhergehenden Ansprüche, **dadurch gekennzeichnet, dass** die Probenschleifen-Port-Nut (81), die beim Umschalten von der LOAD-Position auf die INJECT-Position auf den benachbarten Hochdruck-Port (15) zu bewegt wird, gegenüber der Hochdruck-Port-Nut (85) vorauseilend ausgebildet ist.

9. Probengeber nach einem der vorhergehenden Ansprüche, **dadurch gekennzeichnet, dass** sich der Port-Öffnungsquerschnitt des Hochdruck-Ports (15), welcher während des Umschaltvorgangs nicht dauernd mit einer Nut verbunden ist, nutförmig in Richtung auf die Probenschleifen-Port-Nut (21) erstreckt, wobei die Länge der nutförmigen Erstreckung (151) des Port-Öffnungsquerschnitts so gewählt ist, dass beim Umschalten von der LOAD-Position auf die INJECT-Position die Funktion des Vorauseilens zur Druckbeaufschlagung der Probenschleife (50, 501/502) realisiert ist

10. Probengeber nach einem der vorhergehenden Ansprüche, **dadurch gekennzeichnet, dass** eine ansteuerbare Antriebseinheit für die Drehbewegung des Rotor (2) und eine Steuereinheit vorgesehen ist

11. Probengeber nach Anspruch 10, **dadurch gekennzeichnet, dass** die Steuereinheit die Antriebseinheit derart ansteuert, dass die Dekompression der Probenschleife (50, 501/502) beim Umschalten von der INJECT-Position in die LOAD-Position über den vorbestimmten Probenschleifen-Port (13) im Wesentlichen vollständig erfolgt.

12. Probengeber nach Anspruch 10, **dadurch gekennzeichnet, dass** die Steuereinheit die Geschwindigkeit der Drehbewegung so beeinflusst, dass die Zeitdauer, über weiche eine Dekompression der Probenschleife (50, 501/502) über den gewünschten Probenschleifen-Port (13) erfolgen kann, ausreicht, um eine im Wesentlichen vollständige Dekompression zu gewährleisten.

13. Probengeber nach Anspruch 10 oder 11, **dadurch gekennzeichnet, dass** die Steuereinheit die Drehbewegung über den Winkelbereich, in dem eine Dekompression möglich ist, verlangsamt oder die Drehbewegung in diesem Winkelbereich für eine vorgegebene Zeitspanne stoppt.

14. Probengeber nach einem der Ansprüche 10 bis 12, **dadurch gekennzeichnet, dass** die Steuereinheit die Antrfebseinheit derart ansteuert, dass die Druckbeaufschlagung der Probenschleife (50, 501/502) beim Umschalten von LOAD-Position der in die INJECT-Position über den vorbestimmten Probenschleifen-Port (13) im Wesentlichen vollständig erfolgt

15. Probengeber nach Anspruch 13, **dadurch gekennzeichnet, dass** die Steuereinheit die Geschwindigkeit der Drehbewegung so beeinflusst, dass die Zeitdauer, über welche eine Druckbeaufschlagung der Probenschleife (50, 501/502) über den gewünschten Probenschleifen-Port (13) erfolgen kann, ausreicht, um eine im Wesentlichen vollständige Druckbeaufschlagung zu gewährleisten.

16. Probengeber nach Anspruch 13 oder 14, **dadurch gekennzeichnet, dass** die Steuereinheit die Drehbewegung über den Winkelbereich, in dem eine Druckbeaufschlagung möglich ist, verlangsamt oder die Drehbewegung in diesem Winkelbereich für eine vorgegebene Zeitspanne stoppt.

## Claims

1. Sampler for high-performance liquid chromatography
(a) having a high-pressure injection valve which has at least two load ports (11, 12) for the supply or removal of fluid under low pressure, two sample loop ports (13, 16) and two high-pressure ports (14, 15) for the supply and removal of fluid under high pressure,
(i) wherein the ports (11 to 16) are formed by channels in a stator (1) of the high-pressure injection valve which at one end are connected or can be connected to a fluid line in each case *via* a pressure-tight connector and which at the other end have a predetermined port opening cross-section at an end face (10) of the stator (1),
(ii) wherein a rotor (2) of the high-pressure injection valve has an end face (20) which cooperates with the end face (10) of the stator (1) and in which there are formed at least three grooves (81, 83, 85; 61, 63, 65; 21, 23, 25) which, in dependence on the rotational position of the rotor (2) relative to the stator (1), connect predetermined port opening cross-sections in a pressure-tight manner, wherein the rotor (2) is pressed against the stator (1) with such a high pressing force that the grooves (81, 83, 85; 61, 63, 65; 21, 23, 25) in the end face (20) of the rotor are sealed for pressures greater than 600 bar,
(iii) wherein the at least three grooves (81, 83, 85; 61, 63, 65; 21, 23, 25) extend at least in angle ranges in the circumferential direction, and concentrically with respect to the axis of rotation, such that a fluid flow is possible between the grooves (81, 83, 85; 61, 63, 65; 21, 23, 25) and corresponding ports,
(b) having a sample loop (50, 501/502) which is connected at one end to one of the sample loop ports (13, 16) and at the other end to the other of the sample loop ports (13, 16), and
(c) having a high-pressure pump (40) which is connected to one of the high-pressure ports (15),
(d) wherein the at least three grooves (81, 83, 85; 61, 63, 65; 21, 23, 25) of the rotor (2) and the port opening cross-sections are so configured and arranged that
(i) in a LOAD position of the rotor (2), the two high-pressure ports (14, 15) are connected to one another, and one of the sample loop ports (13, 16) is connected to one of the load ports (11, 12) and the other of the sample loop ports (13, 16) is connected to the other load port (11, 12),
(ii) in an INJECT position of the rotor (2), the two load ports (11, 12) are connected to one another, and one of the high-pressure ports (14, 15) is connected to one of the sample loop ports (13, 16) and the other of the high-pressure ports (14, 15) is connected to the other of the sample loop ports (13, 16), and
(iii) both in the LOAD position and in the INJECT position, a first (83, 63, 23) of the grooves is connected to a load port (load port groove), a second (81, 61, 21) of the grooves is connected to a sample loop port (sample loop port groove), and a third (85, 65, 25) of the grooves is connected to a high-pressure port (high-pressure port groove),
**characterised in that**
(e) the at least three grooves (81, 83, 85; 61, 63, 65, 66; 21, 23, 25) and/or the port opening cross-sections are so provided and configured and the direction of rotation is so chosen that, upon rotation of the rotor (2) from the INJECT position into the LOAD position, the sample loop (50, 501/502) under high pressure is decompressed in such a manner that
(i) the grooves (81, 83, 85; 61, 63, 65, 66; 21, 23, 25) and/or the port opening cross-sections are so configured and arranged that the connection between the sample loop port (13) and the load port (12) which is formed by the movement of the load port groove (83, 63, 23) in the direction towards the sample loop port (13) in question is first produced and maintained before the connection between the other sample loop port (16) and the other load port (11), which is formed by the movement of the sample loop port groove (81, 61, 21) in the direction towards the load port (11) in question, is produced and maintained (advance function for decompression of the sample loop),
or
(ii) a further relief groove (66) is provided in the rotor (2), which relief groove is so configured that, before the LOAD position is reached, in a specific rotational position or over a specific angle range, a connection is produced and maintained between the sample loop port (13) and the load port (11) that are not permanently connected to a groove, wherein the end of the relief groove (66) that is connected to the sample loop port (13) and/or the port opening cross-section extend concentrically and in the circumferential direction over a sufficiently long relief region which is of such a size that the flow speeds of the fluid flow which is formed when the relief groove (66) and the port opening cross- section overlap are reduced sufficiently in the relief region that damage to the stator (1) and/or to the rotor (2) is avoided,
and **in that**
(f) the direction of rotation is so chosen and the grooves (81, 83, 85; 61, 63, 65, 66; 21, 23, 25) and/or the port opening cross-sections are so configured and arranged that, upon rotation of the rotor (2) from the LOAD position into the INJECT position, high pressure is applied to the substantially pressure-free sample loop (50, 501/502) in such a manner that
(i) first the connection between the sample loop port (16) that is permanently connected to a groove (81, 61, 21) during the switching movement and the respective high-pressure port (15) is produced and maintained, the sample loop port groove (81, 61, 21) to that end being moved in the direction towards the respective high-pressure port (15), and
(ii) only then is the connection between the other high-pressure port (14) and the other sample loop port (13) produced and maintained, the high-pressure port groove (85, 65, 25) to that end being moved in the direction towards the respective sample loop port (advance function for application of pressure to the sample loop).

2. Sampler according to claim 1, **characterised in that** the load port groove (83, 63, 23), the sample loop port groove (81,61,21) and the high-pressure port groove (85, 65, 25) are each configured to extend in the circumferential direction and concentrically and, upon switching from the LOAD position to the INJECT position and *vice versa,* are permanently connected to the respective port.

3. Sampler according to claim 1 or 2, **characterised in that** the port opening cross-sections are provided at equidistant angular distances along the circular path defined by the grooves (81, 83, 85; 61, 63, 65; 21, 23, 25).

4. Sampler according to any one of the preceding claims, **characterised in that**, in respect of the switch from the INJECT position to the LOAD position, the load port groove (83) is configured to be in advance of the sample loop port groove (81,61,21).

5. Sampler according to any one of claims 1 to 3, **characterised in that** the port opening cross-section of the load port (13), which is not permanently connected to a groove, extends in the form of a groove in the direction towards the load port groove (83, 63, 23), the length of the groove-like extension (131) of the port opening cross-section being so chosen that, upon switching from the INJECT position to the LOAD position, the advance function for decompression of the sample loop (50, 501/502) is carried out.

6. Sampler according to any one of the preceding claims, **characterised in that** the high-pressure port groove (85, 65, 25) is of such a length that the two high-pressure ports (14, 15) are connected in the rotational position in which decompression of the sample loop takes place, or over the entire angle range of the rotational movement in which decompression of the sample loop (50, 501/502) takes place.

7. Sampler according to any one of claims 1 to 5, **characterised in that** the port opening cross-section of the high-pressure port (15), which is not permanently connected to a groove during the switching operation, extends in the form of a groove in the direction towards the high-pressure port groove (25), the length of the groove-like extension of the port opening cross-section being so chosen that the two high-pressure ports (14, 15), upon switching from the INJECT position to the LOAD position, are connected in the rotational position in which decompression of the sample loop (50, 501/502) takes place or over the entire angle range of the rotational movement in which decompression of the sample loop (50, 501/502) takes place.

8. Sampler according to any one of the preceding claims, **characterised in that** the sample loop port groove (81), which upon switching from the LOAD position to the INJECT position is moved towards the adjacent high-pressure port (15), is configured to be in advance of the high-pressure port groove (85).

9. Sampler according to any one of the preceding claims, **characterised in that** the port opening cross-section of the high-pressure port (15), which is not permanently connected to a groove during the switching operation, extends in the form of a groove in the direction towards the sample loop port groove (21), the length of the groove-like extension (151) of the port opening cross-section being so chosen that, upon switching from the LOAD position to the INJECT position, the advance function for pressurisation of the sample loop (50, 501/502) is carried out.

10. Sampler according to any one of the preceding claims, **characterised in that** a controllable drive unit for the rotational movement of the rotor (2) and a control unit is provided.

11. Sampler according to claim 10, **characterised in that** the control unit controls the drive unit in such a manner that the decompression of the sample loop (50, 501/502) upon switching from the INJECT position into the LOAD position takes place substantially completely by way of the predetermined sample loop port (13).

12. Sampler according to claim 10, **characterised in that** the control unit influences the speed of the rotational movement in such a manner that the period of time for which decompression of the sample loop (50, 501/502) can take place by way of the desired sample loop port (13) is sufficient to ensure substantially complete decompression.

13. Sampler according to claim 10 or 11, **characterised in that** the control unit slows the rotational movement over the angle range in which decompression is possible or stops the rotational movement **in that** angle range for a given period of time.

14. Sampler according to any one of claims 10 to 12, **characterised in that** the control unit controls the drive unit in such a manner that the pressurisation of the sample loop (50, 501/502) upon switching from the LOAD position into the INJECT position takes place substantially completely by way of the predetermined sample loop port (13).

15. Sampler according to claim 13, **characterised in that** the control unit influences the speed of the rotational movement in such a manner that the period of time for which pressurisation of the sample loop (50, 501/502) can take place by way of the desired sample loop port (13) is sufficient to ensure substantially complete pressurisation.

16. Sampler according to claim 13 or 14, **characterised in that** the control unit slows the rotational movement over the angle range in which pressurisation is possible or stops the rotational movement **in that** angle range for a given period of time.

## Revendications

1. Passeur d'échantillons pour la chromatographie liquide haute performance
(a) avec une soupape d'injection à haute pression, qui comprend au moins deux orifices de chargement (11, 12) pour l'introduction ou l'évacuation d'un fluide sous basse pression, deux orifices de boucle d'échantillon (13, 16) ainsi que deux orifices haute pression (14, 15) pour l'introduction et l'évacuation d'un fluide sous haute pression,
(i) les orifices (11 à 16) étant constitués de canaux dans un stator (1) de la soupape d'injection à haute pression, qui sont reliés ou peuvent être reliés, à une extrémité, par l'intermédiaire d'un raccord étanche à la pression respectif, avec une conduite de fluide et qui présentent, à une autre extrémité, au niveau d'une surface frontale (10) du stator (1), une section d'ouverture d'orifice prédéterminée,
(ii) un rotor (2) de la soupape d'injection à haute pression comprenant une surface frontale (20) en interaction avec la surface frontale (10) du stator (1), dans laquelle sont réalisées au moins trois rainures (81, 83, 85 ; 61, 63, 65 ; 21, 23, 25), qui relient, de manière étanche à la pression, des sections d'ouvertures d'orifices prédéterminées en face du stator (1) en fonction de la position de rotation du rotor (2), le rotor (2) étant comprimé contre le stator (1) avec une force de pression d'une valeur telle que les rainures (81, 83, 85 ; 61, 63, 65 ; 21, 23, 25) dans la surface frontale (20) du rotor soient étanchéifiées pour des pressions supérieures à 600 bar,
(iii) les au moins trois rainures (81, 83, 85; 61, 63, 65; 21, 23, 25) s'étendant au moins dans les zones angulaires sur la circonférence et concentriques par rapport à l'axe de rotation, dans lesquelles l'écoulement d'un fluide est possible entre les rainures (81, 83, 85 ; 61, 63, 65 ; 21, 23, 25) et des orifices correspondants,
(b) avec une boucle d'échantillon (50, 501/502) qui est reliée, à une extrémité, avec l'un des orifices de boucle d'échantillon (13, 16) et, à l'autre extrémité, avec l'autre orifice de boucle d'échantillon (13, 16) et
(c) avec une pompe haute pression (40) reliée à l'un des orifices à haute pression (15),
(d) les au moins trois rainures (81, 83, 85 ; 61, 63, 65 ; 21, 23, 25) du rotor (2) et les sections d'ouverture des orifices étant conçues et disposées de façon à ce que
(i) dans une position LOAD du rotor (2), les deux orifices à haute pression (14, 15) soient reliés entre eux ainsi qu'un des orifices de boucle d'échantillon (13, 14) avec l'un des orifices de chargement (11, 12) et l'autre orifice de boucle d'échantillon (13, 16) avec l'autre orifice de chargement (11, 12),
(ii) dans une position INJECT du rotor (2), les deux orifices de chargement (11, 12) soient reliés entre eux ainsi qu'un des orifices haute pression (14, 15) avec un des orifices de boucle d'échantillon (13, 16) et l'autre orifice haute pression (14, 15) avec l'autre orifice de boucle d'échantillon (13, 16) et
(iii) dans la position LOAD ainsi que dans la position INJECT une première rainure (83, 63, 23) soit reliée avec un orifice de chargement (rainure d'orifice de chargement), une deuxième rainure (81, 61, 21) soit reliée avec un orifice de boucle d'échantillon (rainure d'orifice de boucle d'échantillon) et une troisième rainure (85, 65, 25) soit reliée à un orifice haute pression (rainure d'orifice haute pression), **caractérisé en ce que**
(e) les au moins trois rainures (81, 83, 85 ; 61, 63, 65 ; 21, 23, 25) et/ou les sections d'ouverture des orifices sont prévues et conçues et le sens de rotation est choisi de façon à ce que, lors d'une rotation du rotor (2) de la position INJECT vers la position LOAD, la boucle d'échantillon (50, 501/502) sous haute pression soit décomprimé de façon à ce que
(i) les rainures (81, 83, 85 ; 61, 63, 65 ; 21, 23, 25) et/ou les sections d'ouverture des orifices soient conçues et disposées de façon à ce que la liaison entre l'orifice de boucle d'échantillon (13) et l'orifice de chargement (12), qui résulte du mouvement de la rainure de l'orifice de chargement (83, 63, 23) en direction de l'orifice de boucle d'échantillon (13) correspondant, soit établie et maintenue en premier avant que la liaison entre l'autre orifice de boucle d'échantillon (16) et l'autre orifice de chargement (11), qui résulte du mouvement de la rainure de l'orifice de boucle d'échantillon (81, 61, 21) en direction de l'orifice de chargement (11) correspondant, soit établie et maintenue (fonction d'avance pour la décompression de la boucle d'échantillon),
ou
(ii) une rainure de détente (86) supplémentaire soit prévue dans le rotor (2), qui est conçue de façon à ce que, avant d'atteindre la position LOAD, dans une position de rotation déterminée ou au-delà d'une plage angulaire déterminée, une liaison entre l'orifice de boucle d'échantillon (13) et l'orifice de chargement (11), qui ne sont pas reliés durablement avec une rainure, soit établie et maintenue, l'extrémité de la rainure de détente (66), qui est reliée à l'orifice de boucle d'échantillon (13), et/ou la section d'ouverture de l'orifice, s'étendant de manière concentrique et dans la direction circonférentielle sur une zone de détente suffisamment longue qui est dimensionnée de façon à ce que les vitesses d'écoulement des fluides, qui sont obtenues lors du recouvrement de la rainure de détente (66) et de la section d'ouverture de l'orifice, soient réduites de façon à éviter un endommagement du stator (1) et/ou du rotor (2),
et
(f) le sens de rotation est choisi et les rainures (81, 83, 85 ; 61, 63, 65 ; 21, 23, 25) et/ou les sections d'ouverture des orifices sont conçues et disposées de façon à ce que, lors d'une rotation du rotor (2) de la position LOAD vers la position INJECT, la boucle d'échantillon (50, 501/502) essentiellement hors pression soit alimentée en haute pression de façon à ce que
(i) la liaison entre l'orifice de boucle d'échantillon (16), qui est relié en permanence, pendant le mouvement de commutation, avec une rainure (81, 61, 21), et l'orifice haute pression (15) correspondant soit établie et maintenue en premier, la rainure de l'orifice de boucle d'échantillon (81, 61, 21) étant pour cela déplacée en direction de l'orifice haute pression (15) correspondant, et
(ii) la liaison entre l'autre orifice haute pression (14) et l'autre orifice de boucle d'échantillon (85, 65, 25) étant établie et maintenue seulement ensuite, la rainure de l'orifice haute pression (85, 65, 25) étant déplacée en direction de l'orifice de boucle d'échantillon correspondant (fonction d'avance pour alimentation en pression de la boucle d'échantillon).

2. Passeur d'échantillon selon la revendication 1, **caractérisé en ce que** la rainure de l'orifice de chargement (83, 63, 23), la rainure de l'orifice de boucle d'échantillon (81, 61, 21) et la rainure de l'orifice haute pression (85, 65, 25) sont respectivement conçues de façon à s'étendre dans la direction circonférentielle et de manière concentrique et, lors d'un passage de la position LOAD à la position INJECT et inversement, sont reliées en permanence avec l'orifice concerné.

3. Passeur d'échantillon selon la revendication 1 ou 2, **caractérisé en ce que** les sections d'ouvertures des orifices sont prévues à des intervalles angulaires équidistants le long de la trajectoire circulaire définie par les rainures (81, 83, 85 ; 61, 63, 65 ; 21, 23, 25).

4. Passeur d'échantillon selon l'une des revendications précédentes, **caractérisé en ce que** la rainure de l'orifice de chargement (83) est conçue de façon à être en avance sur la commutation de la position INJECT vers la position LOAD par rapport à la rainure de l'orifice de boucle d'échantillon (81, 61, 21).

5. Passeur d'échantillon selon l'une des revendications 1 à 3, **caractérisé en ce que** la section d'ouverture de l'orifice de l'orifice de chargement (13), qui n'est pas relié en permanence avec une rainure, s'étend, sous la forme d'une rainure, en direction de la rainure de l'orifice de chargement (83, 63, 23), la longueur de l'extension en forme de rainure (131) de la section d'ouverture de l'orifice étant choisie de façon à ce que, lors de la commutation de la position INJECT vers la position LOAD, la fonction de l'avance pour la décompression de la boucle d'échantillon (50, 501/502) soit réalisée.

6. Passeur d'échantillon selon l'une des revendications précédentes, **caractérisé en ce que** la rainure de l'orifice haute pression (85, 65, 25) présente une longueur telle que les deux orifices haute pression (14, 15) sont reliés dans la position de rotation dans laquelle la décompression de la boucle d'échantillon a lieu ou sur toute la plage angulaire du mouvement de rotation dans laquelle la décompression de la boucle d'échantillon (50, 501/502) a lieu.

7. Passeur d'échantillon selon l'une des revendications 1 à 5, **caractérisé en ce que** la section d'ouverture de l'orifice haute pression (15), qui n'est pas relié de manière permanente avec une rainure pendant le processus de commutation, s'étend sous la forme d'une rainure en direction de la rainure de l'orifice haute pression (25), la longueur de l'extension en forme de rainure de la section d'ouverture de l'orifice étant choisie de façon à ce que les deux orifices haute pression (14, 15) soient reliés lors de la commutation de la position INJECT vers la position LOAD dans la position de rotation dans laquelle la décompression de la boucle d'échantillon (50, 501/502) a lieu ou sur toute la plage angulaire du mouvement de rotation, dans laquelle la décompression de la boucle d'échantillon (50, 501/502).

8. Passeur d'échantillon selon l'une des revendications précédentes, **caractérisé en ce que** la rainure de l'orifice de boucle d'échantillon (81) qui est déplacée, lors de la commutation de la position LOAD vers la position INJECT, en direction de l'orifice haute pression (15) adjacent, est conçue de façon à être en avance sur la rainure de l'orifice haute pression (85).

9. Passeur d'échantillon selon l'une des revendications précédentes, **caractérisé en ce que** la section d'ouverture de l'orifice haute pression (15), qui n'est pas relié de manière permanente avec une rainure pendant le processus de commutation, s'étend sous la forme d'une rainure en direction de la rainure de l'orifice de boucle d'échantillon (21), la longueur de l'extension en forme de rainure (151) de la section d'ouverture de l'orifice étant choisie de façon à ce que, lors de la commutation de la position LOAD vers la position INJECT, la fonction de l'avance pour l'alimentation en pression de la boucle d'échantillon (50, 501/502) est réalisée.

10. Passeur d'échantillon selon l'une des revendications précédentes, **caractérisé en ce qu'**une unité d'entraînement contrôlable pour le mouvement de rotation du rotor (2) et une unité de commande sont prévues.

11. Passeur d'échantillon selon la revendication 10, **caractérisé en ce que** l'unité d'entraînement est commandée de façon à ce que la décompression de la boucle d'échantillon (50, 501/502) a lieu de manière globalement complète lors de la commutation de la position INJECT vers la position LOAD par l'intermédiaire de l'orifice de boucle d'échantillon (13) prédéterminé.

12. Passeur d'échantillon selon la revendication 10, **caractérisé en ce que** l'unité de commande influence la vitesse du mouvement de rotation de façon à ce que la période, pendant laquelle une décompression de la boucle d'échantillon (50, 501/502) peut avoir lieu par l'intermédiaire de l'orifice de boucle d'échantillon (13) souhaité suffit pour garantir une décompression globalement complète.

13. Passeur d'échantillon selon la revendication 10 ou 11, **caractérisé en ce que** l'unité de commande ralentit le mouvement de rotation sur la plage angulaire, dans laquelle une décompression est possible ou arrête le mouvement de rotation dans cette plage angulaire pendant une période prédéterminée.

14. Passeur d'échantillon selon la revendication 10 à 12, **caractérisé en ce que** l'unité de commande contrôle l'unité d'entraînement de façon à ce que l'alimentation en pression de la boucle d'échantillon (50, 501/502) a lieu de manière globalement complète lors de la commutation de la position LOAD vers la position INJECT par l'intermédiaire de l'orifice de boucle d'échantillon (13) prédéterminé.

15. Passeur d'échantillon selon la revendication 13, **caractérisé en ce que** l'unité de commande influence la vitesse du mouvement de rotation de façon à ce que la période pendant laquelle une alimentation en pression de la boucle d'échantillon (50, 501/502) peut avoir lieu par l'intermédiaire de l'orifice de boucle d'échantillon (13) souhaité, suffit pour garantir une alimentation en pression globalement complète.

16. Passeur d'échantillon selon la revendication 13 ou 14, **caractérisé en ce que** l'unité de commande ralentit le mouvement de rotation sur la plage angulaire dans laquelle une alimentation en pression est possible ou arrête le mouvement de rotation dans cette plage angulaire pendant une période prédéterminée.
